(19) Europäisches Patentamt
European Patent Office
Office européen des brevets

(11) **EP 1 157 297 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(21) Anmeldenummer: **00912537.8**

(22) Anmeldetag: **02.03.2000**

(51) Int Cl.[7]: **G02B 21/00**, G01N 21/17, G01N 21/62, G06T 7/00

(86) Internationale Anmeldenummer:
**PCT/EP00/01806**

(87) Internationale Veröffentlichungsnummer:
**WO 00/052512 (08.09.2000 Gazette 2000/36)**

(54) **VERFAHREN UND VORRICHTUNG ZUR OBJEKTABBILDUNG**

METHOD AND DEVICE FOR REPRESENTING AN OBJECT

PROCEDE ET DISPOSITIF POUR LA REPRESENTATION D'OBJETS

(84) Benannte Vertragsstaaten:
**AT BE CH CY DE DK ES FI FR GB GR IE IT LI LU MC NL PT SE**

(30) Priorität: **02.03.1999 DE 19908883**

(43) Veröffentlichungstag der Anmeldung:
**28.11.2001 Patentblatt 2001/48**

(73) Patentinhaber: **Max-Planck-Gesellschaft zur Förderung der Wissenschaften e.V.**
**80539 München (DE)**

(72) Erfinder:
• **HEINTZMANN, Rainer**
**D-37077 Göttingen (DE)**
• **CREMER, Christoph**
**D-69126 Heidelberg (DE)**

(74) Vertreter: **Hertz, Oliver, Dr. et al**
**v. Bezold & Sozien,**
**Akademiestrasse 7**
**80799 München (DE)**

(56) Entgegenhaltungen:
**WO-A-97/06509          WO-A-97/11355**
**DE-A- 4 326 473          US-A- 4 929 951**

• **DUNCAN M D: "MOLECULAR DISCRIMINATION AND CONTRAST ENHANCEMENT USING A SCANNING COHERENT ANTI-STOKES RAMAN MICROSCOPE" OPTICS COMMUNICATIONS,NL,NORTH-HOLLAND PUBLISHING CO. AMSTERDAM, Bd. 50, Nr. 5, 1. Juli 1984 (1984-07-01), Seiten 307-312, XP000707803 ISSN: 0030-4018**
• **HELL S ET AL: "PROPERTIES OF A 4PI CONFOCAL FLUORESCENCE MICROSCOPE" JOURNAL OF THE OPTICAL SOCIETY OF AMERICA - A,US,OPTICAL SOCIETY OF AMERICA, WASHINGTON, Bd. 9, Nr. 12, 1. Dezember 1992 (1992-12-01), Seiten 2159-2166, XP000328467 ISSN: 0740-3232**

# EP 1 157 297 B1

**Beschreibung**

Die Erfindung betrifft ein Verfahren zur Objektabbildung mit hohem räumlichen Auflösungsvermögen, insbesondere ein lichtmikroskopisches Abbildungsverfahren, und Vorrichtungen zur Durchführung eines derartigen Verfahrens.

Das Auflösungsvermögen optischer Abbildungssysteme wird oft entscheidend durch die objektseitige Apertur einer Objektivlinse und deren Brechzahl bestimmt. Von einem Objekt ausgehendes Licht kann nur erfasst werden, wenn es innerhalb des Akzeptanzwinkels des Objektivs auf dieses trifft. Je höher das Auflösungsvermögen ist, desto höhere Orts- oder Raumfrequenzen der abzubildenden Objektstruktur können erfasst werden. Die Erfassung der Raumfrequenzen wird durch die lichtoptische Transferfunktion oder Modulationsübertragungsfunktion (im Folgenden: OTF) des optischen Systems beschrieben. Die OTF gibt an, welche Raumfrequenzen, aus denen sich das Objekt mittels Fouriertransformation zusammengesetzt konstruieren lässt, bei der optischen Abbildung erhalten bleiben, bzw. wie Raumfrequenzanteile geschwächt werden. Das Auflösungsvermögen des optischen Systems (z. B. eines Lichtmikroskops) ist durch den Bereich bestimmt, in dem die OTF des Systems nicht verschwindet. Verschwindet die OTF in Abschnitten des reziproken Raumes vollständig, so ist es unmöglich, ohne zusätzliche Annahmen über die Objektstruktur (z. B. räumliche Beschränktheit, Positivität) die entsprechenden Raumfrequenzen in einer Objektabbildung zu rekonstruieren. Es besteht allgemein ein Interesse an der Ausdehnung der OTF auf einen möglichst großen Bereich im reziproken Raum, um die Auflösung des optischen Systems zu erhöhen.

Herkömmliche Verfahren zur Erhöhung des Auflösungsvermögens sind insbesondere auf eine geeignete Wahl der Objektbeleuchtung gerichtet. So wird bspw. beim konfokalen Mikroskop mit einem fokussierten Lichtstrahl das Objekt von einer Seite möglichst punktweise beleuchtet und gleichzeitig abgetastet (gescannt), wobei oft die Detektion mittels einer Blende auf einen kleinen Bereich des Objekts begrenzt wird (siehe z. B. US-A 4 631 581).

Bei dem in EP 0 491 289 beschriebenen 4Pi-Mikroskop wird von beiden Objektseiten kohärent beleuchtet und je nach Ausführung auch detektiert. Beim Wellenfeldmikroskop wird üblicherweise mit kohärenten ebenen Lichtwellen von gegenüberliegenden Seiten beleuchtet (siehe z. B. US-A 4 621 911; F. Lanny et al. in "Bioimaging", Band 1, 1993, Seite 187 ff.; US-A 5 801 881). Beim $I^5$M-Mikroskop wird sowohl kohärent von beiden Seiten beleuchtet, als auch kohärent detektiert, indem die beiden Bilder des Objekts auf einem ortsauflösenden Detektor zur Interferenz gebracht werden (siehe US-A 5 671 085; M.G.L. Gustafsson et al. in "Proceedings of SPIE", Band 2655, 1996, Seite 62 ff.). Von E.H.K. Stelzer et al. in "Opt. Commun" Band 111, 1994, Seite 536 ff. und S. Lindeck et al. in "Handbook of Biological Confocal Microscopy", Herausgeber J.B. Pawley, Plenum Press, New York 1995, Kapitel 26, Seite 417 ff. wird ein Theta-Mikroskop beschrieben, bei dem Licht von drei Seiten detektiert wird, wobei mit konfokaler oder 4Piähnlicher Beleuchtung gearbeitet wird. Da bei der seitlichen Detektion in der Objektebene die Auflösung entlang der optischen Achse der Beleuchtung besonders groß ist, erhält man insgesamt ein verkleinertes Fokusvolumen.

Es ist auch bekannt, in stereomikroskopischen Oberflächentopographie-Verfahren eine räumlich variierende Beleuchtung (z. B. sinus-förmig variierend) zu verwenden. Durch Verrechnung der gemessenen Bilder kann auf die Oberflächenstruktur des Objekts rückgeschlossen werden (siehe z. B. US-A 4 525 858; R. Windecker et al. in "Optical Engineering", Band 36, 1997, Seite 3372 ff.).

Ein Verfahren zur hochauflösenden dreidimensionalen Bildgebung durch Erfassung optischer Schnitte des Objekts ähnlich zur konfokalen Mikroskopie ist in WO 97/31282 beschrieben. Es basiert auf der Aufnahme mehrerer Bilder mit jeweils unterschiedlichen Mustern aus Beleuchtungslochblenden und zugehörigen Detektionslochblenden. Durch geeignete Rekonstruktionsverfahren lässt sich aus den aufgenommenen Daten ein Bild berechnen, das dem eines konfokalen Mikroskops äquivalent ist. Dieses Verfahren wird auch als "Aperture Correlation Microscopy" bezeichnet (siehe auch R. Juskaitis et al. in "Nature" Band 383, 1996, Seite 804 ff., T. Wilson et al. in "Proceedings of the SPIE", Band 2984, 1997, Seite 21 ff.). Aus WO 98/45745 ist ein Verfahren bekannt, das auf der Beleuchtung unter Abbildung eines Beugungsgitters oder mit zwei interferrierenden Laserstrahlen beruht (siehe auch T. Wilson et al. in "Cell Vision", Band 4, 1997, Seite 231 ff.). In der Publikation von R. Heintzmann et al. in "Proceedings of SPIE" Band 3568, 1999, Seite 185 ff. wird ein ähnliches Verfahren zur lateralen Erhöhung des Auflösungsvermögens eingesetzt.

Die herkömmlichen Techniken besitzen die folgenden Nachteile. Die Abbildungsverfahren sind mit einem relativ großen technischen Aufwand verbunden. So ist insbesondere bei den 4Pi-, $I^5$M- und Theta-Mikroskopen die Justierung besonders schwierig. Die Verfahren sind außerdem nur schwer zu realisieren, da sie lediglich mit großem Aufwand in vorhandene Mikroskopsysteme integrierbar sind. Beim Wellenfeldmikroskop ist es ein großes Problem, dass die OTF in axialer Richtung Bereiche aufweist, an denen sie verschwindet. Außerdem liefert das Wellenfeldmikroskop bzw. das 4Pi-Mikroskop in lateraler Richtung, verglichen mit der herkömmlichen Epi-Fluoreszenz-Mikroskopie bzw. der konfokalen Fluoreszenz-Mikroskopie, keinen Auflösungsgewinn.

Des Weiteren sind viele Verfahren (insbesondere die konfokale Laserscanning-4Pi- und Theta-Mikroskopie) mit einem punktweisen Abrastern des Objekts verbunden. Dies ist zeitaufwendig und vor allem bei der Bildgebung zeitabhängiger Vorgänge problematisch. Abtastende Verfahren benötigen sehr schnelle Detektoren (z. B. Photomultiplier), die jedoch gegenüber langsameren Detektoren mit Ortsauflösung (z. B. CCD's) oft eine deutlich niedrigere Detektionseffizienz besitzen. Bei der Fluoreszenz-Mikroskopie kommt noch erschwerend hinzu, dass die sinnvolle Beleuchtungsstärke durch die maximale Anregungsrate der Farbstoffe im Fokus beschränkt ist. Dies begrenzt die maximale Abtastgeschwindigkeit zusätzlich.

Es sind auch mikroskopische Abbildungsverfahren auf der Basis nicht-linearer Effekte bekannt. So wird bspw. in US-A-5 034 613, US-A-5 777 732, US-A-5 828 459 und US-A-5 796 112 die sog. Mehrphotonen-Mikroskopie beschrieben. Der konfokale Effekt wird dabei durch die gleichzeitige Absorption mehrerer Photonen an bestimmten Objektorten erzielt. Andere Techniken basieren auf der stimulierten Emission (siehe US-A-5 731 588, DE-OS 44 16 558) oder dem Entvölkern des Grundzustandes von Fluoreszenz-Molekülen, indem diese gezielt in den längerlebigen Triplettzustand gepumpt werden (siehe S.W. Hell et al. in "Applied Physics B", Band 60, 1995, Seite 495 ff.).

Ein weiteres hochauflösendes Abbildungsverfahren ist in WO97/06509 beschrieben.

Mit den Verfahren auf der Grundlage nicht-linearer optischer Effekte konnte bisher keine erhebliche Erhöhung des Auflösungsvermögens erreicht werden. Dies hängt insbesondere damit zusammen, dass zur Erzielung von Mehrphotonen-Absorptionen die einzelnen Photonen relativ geringe Energien und somit große Wellenlängen besitzen müssen. Außerdem ist die Übertragungseffienz bei hohen Raumfrequenzen im Allgemeinen sehr schlecht, weil typischerweise nur ein sehr kleiner Teil des Beleuchtungsmusters hohe Raumfrequenzen enthält.

Die Aufgabe der Erfindung ist es, ein verbessertes Abbildungsverfahren mit einem hohen Auflösungsvermögen anzugeben. Das Verfahren soll insbesondere die o. g. Nachteile herkömmlicher Mikroskopie-Verfahren überwinden, mit einem vereinfachten technischen Aufwand realisierbar sein, eine schnelle Bildaufnahme auch zeitabhängiger Vorgänge erlauben und mit herkömmlichen optischen Systemen kompatibel sein. Das erfindungsgemäße Verfahren soll des Weiteren ermöglichen, bekannte mikroskopische Verfahren unter Beibehaltung ihrer jeweiligen Vorteile so zu erweitern, dass das Auflösungsvermögen zusätzlich gesteigert wird. Die Aufgabe der Erfindung ist es auch, ein optisches System zur Durchführung derart verbesserter Verfahren anzugeben.

Diese Aufgaben werden durch ein Verfahren und ein optisches System mit den Merkmalen gemäß den Patentansprüchen 1 bzw. 14 gelöst. Vorteilhafte Ausführungsformen und Verwendungen der Erfindung ergeben sich aus den abhängigen Ansprüchen.

Die Grundidee der Erfindung ist es, zur Gewinnung einer Objektabbildung (Bild einer Objektstruktur) mindestens zwei Teilbilder eines Objekts unter jeweils verschiedenen Objektbedingungen aufzunehmen, die am Objekt mit räumlichen Mustern ausgebildet sind, wobei jeweils für einen Objektpunkt eine nicht-lineare Abhängigkeit des vom Objektpunkt her detektierten Lichtes von den am Objektpunkt gegebenen Objektbedingungen besteht und die Teilbilder unterschiedliche Beiträge verschiedener Raumfrequenzanteile der Objektstruktur enthalten, und aus den Teilbildern durch Rekonstruktion der Raumfrequenzanteile die gewünschte Objektabbildung zu gewinnen. Die Einstellung von Objektbedingungen mit verschiedenen räumlichen Mustern zur Erfassung der verschiedenen Teilbilder besitzt den Vorteil, dass virtuell nieder- und höherfrequente Raumfrequenzanteile im Muster der Objektbedingungen erzeugt werden, an die die Raumfrequenzanteile der Objektstruktur gekoppelt sind. Durch diese Kopplung werden die Raumfrequenzanteile der Objektstruktur in Bezug auf das Raumfrequenzintervall verschoben, das entsprechend der lichtoptischen Transferfunktion (OTF) für eine Bilderfassung offen ist. Aus den Teilbildern kann die vollständige Objektabbildung mit einem entsprechend erweiterten Raumfrequenzbereich rekonstruiert werden.

Durch Ausnutzung eines nicht-linearen Zusammenhangs zwischen vom Objekt ausgehenden Licht und dem lokalen, objektpunktbezogenen Wert einer weiteren räumlichen veränderlichen Größe (z. B. der lokalen Einstrahlungs- oder Beleuchtungsintensität) lässt sich der vom Gesamtsystem effektiv übertragene Raumfrequenzbereich beträchtlich erweitern. Durch lokale Variation der Einflussgröße und die Aufnahme mehrerer Teilbilder lässt sich eine Objektabbildung rekonstruieren, deren Auflösung aufgrund der Nicht-Linearität fundamental höher als die durch das Abbe-Limit gegebene Auflösung ist. Zur Erzeugung nicht-linearer Effekte können verschiedene Möglichkeiten anwendungsabhängig gewählt werden. Ebenfalls ist die Gewinnung der Objektabbildung aus den Teilbildern anwendungsabhängig mit verschiedenen Arten der Datenauswertung möglich.

Ein wichtiges Merkmal der Erfindung ist die Einstellung vorbestimmter Objektbedingungen mit verschiedenen räumlichen Mustern. Am Objekt werden entsprechend dem jeweiligen Muster punktweise Objektbedingungen eingestellt, von denen das erfasste Licht nicht-linear abhängig ist. Gemäß einer ersten Ausführungsform der Erfindung ist die Einstellung vorbestimmter Objektbedingungen die Bildung eines räumlichen Musters mindestens einer Objektbedingung, von der die erfasste Lichtmenge jeweils nicht-linear abhängig ist. Gemäß einer abgewandelten Ausführungsform der Erfindung umfasst die Einstellung vorbestimmter Objektbedingungen die Erzeugung eines räumlichen Musters von mindestens zwei verschiedenen Objektbedingungen, wobei eine Abhängigkeit der erfassten Lichtmenge von einer multiplikativen Verknüpfung der Objektbedingungen und eine lineare oder eine nicht-lineare Abhängigkeit der erfassten Lichtmenge von jeder der Objektbedingungen besteht. Allgemein wird von einer multi-linearen Abhängigkeit des erfassten Lichtes (z. B. der erfassten Lichtintensität oder Lichtphase) gesprochen.

Die Zahl der Teilbilder ist abhängig von der Zahl der bei der Bildrekonstruktion meßbaren und anwendungsabhängig zu berücksichtigenden Raumfrequenzanteile im Muster des vom Objekt ausgesandten Lichtes. Diese Zahl ist insbesondere von der verwendeten Objektbedingung zur Einführung der Nicht-Linearität und von der Qualität des realisierten Abbildungsverfahrens abhängig. Beträgt die Anzahl der genannten Raumfrequenzanteile Z, so sind in der Regel mindestens Z Teilbilder aufzunehmen. Es kann aber fallabhängig auch ausreichend sein, weniger Teilbilder aufzunehmen, wenn genügend Informationen zur Rekonstruktion der Objektabbildung vorliegen. Die Zahl der Teilbilder wird fest eingestellt oder automatisch in Abhängigkeit von der Qualität der gewonnenen Objektabbildung und/oder manuell vom Nutzer des optischen Systems eingestellt.

Das erfindungsgemäße Verfahren umfaßt insbesondere die folgenden Schritte: (a) Anpassung der im Objekt herrschenden Bedingungen, die das von einem Objektpunkt ausgehende Licht zu beeinflussen imstande sind derart, daß eine nicht-lineare Abhängigkeit der von einem Objektpunkt detektierten Lichtintensität von dem Wert eines in mindestens einer Objektbedingung enthaltenen räumlichen Musters in mindestens einem detektierten Wert hervorgerufen wird oder eine jeweils zu einem Wert lineare Abhängigkeit der von diesem Objektpunkt detektierten Lichtintensität von den Werten mindestens zweier räumlicher Muster hervorgerufen wird, (b) Aufzeichnung mindestens eines Einzelbildes unter diesen Objektbedingungen, (c) Ändern der Objektbedingungen derart, daß unterschiedliche durch das Aufnahmeverfahren abgebildete Raumfrequenzanteile des Objekts sich in ihrer Amplitude und/oder Phasenbeziehung zueinander verändern, (d) Aufzeichnung wenigstens eines weiteren Einzelbildes unter jeweils gemäß (c) veränderten Objektbedingungen, und (e) Auswertung der gemessenen Bilder, indem die sich in den Einzelbildern unterschiedlich ausprägenden Objektbedingungen genutzt werden, um Informationen über das Objekt zurückzugewinnen, die zu Raumfrequenzen des Objekts gehören, welche durch eine einfache Abbildung mit dem Aufnahmeverfahren nicht zugänglich wären.

Ein erfindungsgemäßes optisches System zur Objektabbildung zeichnet sich insbesondere durch einen Mustergenerator, der zur Einstellung und Veränderung vorbestimmter räumlicher Muster von Objektbedingungen eingerichtet ist, von denen das von einem Objekt detektierte Licht nicht-linear abhängig ist, und einen Bildgenerator zur Rekonstruktion der Objektabbildung aus den erfassten Teilbildern aus.

Die Erfindung besitzt die folgenden Vorteile. Die Gewinnung von Objektabbildungen ist relativ einfach realisierbar. Die Justierung des optischen Systems beschränkt sich auf einen minimalen Justierungsaufwand. Die Erfindung kann durch Nachrüstung bestehender Abbildungssysteme implementiert werden.

Von besonderem Vorteil ist, dass hohe Raumfrequenzen, die in Abbildungsobjektiven ggf. stark unterdrückt werden, nun durch die Verschiebung im Frequenzraum effizienter detektiert werden können. Zusätzlich zum lateralen Auflösungsgewinn ergibt sich auch ein axialer Auflösungsgewinn und die Möglichkeit, zur optischen Achse senkrecht stehende Ebenen in axialer Richtung zu diskriminieren. Damit liefert die Erfindung vorteilhafte Verwendungen wie die Konfokalmikroskopie. Auch in axialer Richtung ergibt sich bei Ausnutzung der nicht-linearen Abhängigkeit der erfassten Lichtmenge von den Objektbedingungen die Möglichkeit zu einem erheblichen Auflösungsgewinn.

Die Erfindung ist mit Vorteil in Kombination mit herkömmlichen Abbildungsverfahren, insbesondere Mikroskopieverfahren, anwendbar. Dies betrifft insbesondere die o. g. Techniken und die Absorptionsmikroskopie, die Reflektionsmikroskopie, die ortsaufgelöste Abbildung von Fluoreszenzlebensdauern (sog. "Fluorescence Lifetime Imaging"), die Mehrphotonenmikroskopie, Interferenzmikroskopie, Konfokalmikroskopie usw..

Das erfindungsgemäße Abbildungsverfahren besitzt eine hohe Geschwindigkeit der Bildaufnahme. Die Bildgebung kann z. B. mit einer CCD-Kamera an allen Objektpunkten in der Bildebene gleichzeitig erfolgen und ist daher deutlich schneller möglich, als bei abtastenden Verfahren.

Die Erfindung ist unter Verwendung der verschiedenartigsten nicht-linearen Effekte realisierbar. Bspw. kann in einem Fluoreszenzmikroskop die Beleuchtung mit einer derartigen Intensität erfolgen, dass Fluoreszenzfarbstoffe im Objekt gesättigt werden. Dies ermöglicht auch, verschiedene Farbstoffe oder Farbstoffe in verschiedenen Umgebungen (z. B. in verschiedenen Bindungszuständen), die sonst schlecht zu unterscheiden wären, aufgrund verschiedener nicht-linearer Eigenschaften (Sättigungseigenschaften) zu diskriminieren.

Weitere Vorteile und Einzelheiten der Erfindung werden im Folgenden aus der Beschreibung der beigefügten Zeichnungen ersichtlich. Es zeigen:

Figur 1          eine Illustration der Objektbeleuchtung im reziproken Raum bei sinusförmiger Beleuchtung mit geringer Intensität,

Figur 2          eine Illustration der Objektbeleuchtung im reziproken Raum bei einem nicht-linear verzerrten Anregungsmuster,

Figur 3          eine Blockdarstellung eines erfindungsgemäßen optischen Systems,

Figur 4          Einzelheiten eines optischen Systems gemäß einer ersten Ausführungsform der Erfindung,

Figur 5          Einzelheiten eines optischen Systems gemäß einer weiteren Ausführungsform der Erfindung,

Figuren 6 und 7    Simulationsergebnisse zur Illustration eines erfindungsgemäßen Verfahrens,

Figur 8            eine Kurvendarstellung zur Illustration des lateralen Auflösungsvermögens,

Figur 9            eine Kurvendarstellung der effektiven Gesamt-OTF eines erfindungsgemäßen optischen Systems (mit Rekonstruktion), und

Figur 10           Beispiele vom Objektabbildungen.

Die Erfindung wird im Folgenden zunächst anhand der theoretischen Grundlagen und anschließend an verschiedenen Beispielen erläutert. Die Erfindung ist nicht auf die gegebenen Ausführungsbeispiele beschränkt. Insbesondere im Rahmen der folgenden Begriffsbestimmung sind abgewandelte Ausführungsformen unter entsprechend variierten Objektbedingungen anwendungsabhängig realisierbar.

Der bei einer optischen Abbildung zu erfassende Gegenstand oder Teilabschnitte des Gegenstands werden im Folgenden allgemein als "Objekt" bezeichnet. Objekte sind insbesondere alle Formen von biologischen oder synthetischen Proben, wie sie mit herkömmlichen Abbildungsverfahren und ortsauflösenden Analyseverfahren, insbesondere Mikroskopie und Spektroskopie-Verfahren, untersucht werden. Anwendungen ergeben sich z. B. in der Biologie, Medizin, Chemie, Halbleitertechnik, Einzelmolekülspektroskopie u. dgl.. Das Objekt kann fest, flüssig oder auch gasförmig sein.

Unter "Objektbedingungen" werden allgemein alle Parameter und/oder Bedingungen am Ort des Objektes verstanden, mit denen eine oder mehrere Eigenschaften des vom Objekt ausgehenden Lichtes beeinflussbar sind. Zu diesen Eigenschaften zählen insbesondere die Intensität, der Polarisationszustand, die Phase, die Farbe, die Pulsform, die Pulslänge, der Kohärenzgrad, die Photonenkorrelation und dergleichen. Objektbedingungen können inhärente physikalische oder chemische Eigenschaften des Objekts, wie z. B. eine bestimmte stoffliche Zusammensetzung, eine Temperaturverteilung oder eine Druckverteilung, oder von außen aufgeprägte Parameter, wie z. B. die Beleuchtungsintensität auf der Objektoberfläche oder im Objekt, umfassen.

Die Ausbildung der Objektbedingungen mit einem räumlichen Muster bedeutet, daß die Objektbedingungen mit einer bestimmten Ortsabhängigkeit beschrieben werden können. Das Muster kann durch eine Struktur (z. B. ein Punkt- oder Strichmuster) charakterisiert sein oder auch strukturlos sein (für alle Objektpunkte gelten die gleichen Objektbedingungen). Die Aufnahme von Teilbilder unter verschiedenen Objektbedingungen bedeutet, daß zwischen den Aufnahmen das Muster an sich (z. B. mit einem DMD-Reflektor, s. u.), die Position und/oder Orientierung des Musters relativ zur Probe (z. B. mit einem verschiebbaren Beugungsgitter, s. u.) und/oder eine Intensitätseigenschaft des Musters (z. B. mit einer Variation der Intensität der Objektbeleuchtung, s. u.) verändert wird.

Eine "nicht-lineare Abhängigkeit" des vom Objekt ausgehenden bzw. mit einem Detektor erfassten oder detektierten Lichtes ist gegeben, wenn dessen Lichtintensität von der jeweiligen Objektbedingung Ort der Lichtaussendung (oder -streuung oder dergleichen) messbar keinem einfachen linearen Modell folgt. In einer Funktionenentwicklung, z. B. Taylor-Entwicklung (siehe unten), des detektierten Lichts treten Terme höherer Ordnung auf. Gemäß den o. g. Ausführungsformen der Erfindung kann eine nicht-lineare Abhängigkeit der Lichtintensität jeweils von einer Objektbedingung oder eine lineare Abhängigkeit der Lichtintensität von mehreren Objektbedingungen gegeben sein. Im letzteren Fall treten in der Funktionenentwicklung Mischterme auf, die die unten erläuterte Erweiterung der detektierbaren Objekt-Raumfrequenzen erlauben.

Die "detektierte Lichtintensität", die die vom Detektor gemessene Lichtintensität ist, kann anwendungsabhängig je nach Funktionalität des Detektors von der am Ort des Detektors herrschenden mittleren Lichtintensität abweichen, wenn z. B. zeitlich moduliert detektiert wird oder ein rohes Detektorsignal mit anderen Signalen korreliert wird (z. B. durch Lock-In-Technik).

Unter einem "Teilbild" oder "Einzelbild" werden allgemein Bilddaten verstanden, die mit einem in weitesten Sinne abbildenden lichtoptischen Verfahren aufgenommen wurden. Es kann sich dabei um einen einzelnen Datenpunkt, mehrere an ein oder verschiedenen Objektpunkten aufgenommene Datenpunkte oder Datenpunktbereiche in ein, zwei, drei oder mehr Dimensionen handeln. Die erfindungsgemäße Änderung von Objektbedingungen bei Aufnahme verschiedener Teilbilder kann sich auf eine Änderung oder Modulierung bei jedem Datenpunkt, für Abschnitte oder Gruppen von Datenpunkten oder für ganze zwei- oder dreidimensionale Bilder oder sogar Zeitserien vorgesehen sein.

Unter "detektierbaren Raumfrequenzanteilen" werden allgemein die Anteile des Frequenzraums der Fouriertransformierten des Objekts verstanden, die mit dem jeweils angewendeten Abbildungsverfahren prinzipiell detektierbar sind.

Die Erfindung erlaubt nicht nur eine Objektabbildung mit erhöhtem Auflösungsvermögen, sondern auch die Gewinnung von "Informationen über das Objekt". Hierunter werden insbesondere die räumliche Verteilung einer oder mehrerer Eigenschaften des Objekts oder auch andere Parameter, wie z. B. die Position eines von seiner Struktur her bekannten Teilobjekts im Raum oder die Zusammensetzung des Objekts, verstanden.

Grundlagen der Bilderfassung

Die Bildaufnahme wird im Folgenden am Beispiel der Fluoreszenzmikroskopie erläutert. In der Fluoreszenzmikroskopie werden Objekte abgebildet, die mit Fluoreszenzfarbstoffen markiert sind oder selbstständig fluoreszieren. Je nach Objektstruktur und/oder Markierungstechnik sammeln sich z. B. Markierungsfarbstoffe in bestimmten Teilbereichen (z. B. im Zellkern einer biologischen Zelle). Zur Bildaufnahme wird das Objekt mit einer geeigneten Anregungswellenlänge bestrahlt und die emittierte Fluoreszenzstrahlung detektiert. Fluoreszenzfarbstoffe emittieren mit einer Intensität, die in ersten Näherung proportional zur Intensität des am Ort des Farbstoffs eingestrahlten Lichtes ist. Die Emission erfolgt im Unterschied zur Absorptionsmikroskopie, Reflektionsmikroskopie oder auch Phasenkontrastmikroskopie im allgemeinen inkohärent zueinander. Unter Annahme einer Proportionalität zwischen der an einem Objektpunkt ausgestrahlten Fluoreszenzintensität zur dort eingestrahlten Lichtintensität des Anregungslichts lässt sich ein detektiertes Bild $I_m(\vec{x})$ (rückübersetzt in Objektraumkoordinaten $\vec{x}$) wie folgt beschreiben. Die ortsabhängige Beleuchtungsintensität $(Bel(\vec{x})$ wird mit der am jeweiligen Objektpunkt vorhandenen Farbstoffkonzentration $Obj(\vec{x})$ (Objektstruktur) multipliziert und das Ergebnis mit der Punktbildfunktion ("Point Spread Function", PSF) des abbildenden Systems gefaltet (siehe Gleichung (1)).

$$I_m(\vec{x}) = PSF(\vec{x}) \otimes \left(Bel(\vec{x}) \cdot Obj(\vec{x})\right) \tag{1}$$

Im reziproken Raum übersetzt sich dies in die Faltung der fouriertransformierten Beleuchtungsfunktion $F(Bel(\vec{x}))$ mit der fouriertransformierten Objektfunktion $F(Obj(\vec{x}))$ und anschließende Multiplikation mit der lichtoptischen Transferfunktion $OTF(\vec{k})$ (F bezeichnet hier und im Folgenden die Fourierformation, die Koordinaten im reziproken Raum werden mit $\vec{k}$ bezeichnet). Analog zu Gleichung (1) ergibt sich:

$$F\left(I_m(\vec{x})\right) = OTF(\vec{k}) \cdot \left(F(Bel(\vec{x})) \otimes F(Obj(\vec{x}))\right)$$

Verallgemeinert auf andere Mikroskopieverfahren bedeutet $Obj(\vec{x})$ den jeweiligen Wert oder die Dichte der Eigenschaften des Objekts, die zu erfassen ist, und $PSF(\vec{x})$ die effektive Punktbildfunkion des gesamten Systems (Bildaufnahme und -rekonstruktion). Auch bei iterativen oder nicht-linearen Rekonstruktionsverfahren gilt dies oft noch näherungsweise.
In herkömmlichen abbildenden Systemen ist der im Wert von Null verschiedene Bereich der OTF, der auch als "Träger" bezeichnet wird, durch die numerische Apertur und die Wellenlänge des abzubildenden Lichts auf einen gewissen Raumfrequenzbereich eingeschränkt (siehe auch US-A-5 671 085). Gleichermaßen ist auch die Fouriertransformierte der Beleuchtungsfunktion $F(Bel(\vec{x}))$ in der Ausdehnung ihres Trägers durch die Lichtwellenlänge und ggf. Aperturen des Beleuchtungssystems eingeschränkt.
Erfindungsgemäß ist nun vorgesehen, den effektiven Bereich von detektierbaren Raumfrequenzen des Objekts $F(Obj(\vec{x}))$ ("Objekt-Raumfrequenzen") auf der Grundlage der folgenden Überlegungen zu erweitern. Bei Einführung einer nicht-linearen Abhängigkeit der erfassten Lichtintensität von den Objektbedingungen ist der rechte Teil von Gleichung (1) verallgemeinert gemäß den Ausdrücken (2) bzw. (3) zu schreiben:

$$PSF(\vec{x}) \otimes I_{em}\left(Obj(\vec{x}), \vec{b}(\vec{x})\right) \tag{2}$$

$$\Leftrightarrow \; OTF(\vec{k}) \cdot F\left(I_{em}\left(Obj(\vec{x}), \vec{b}(\vec{x})\right)\right) \tag{3}$$

Entsprechend dem Ausdruck (2) wird kein linearer Zusammenhang zwischen der von einem Objektpunkt ausgehenden Lichtintensität $I_{em}(\vec{x})$ und der dort eingestrahlten Lichtintensität (enthalten in $\vec{b}(\vec{x})$) vorausgesetzt. Vielmehr ist nun $I_{em}(\vec{x})$ eine allgemeine Funktion des Wertes der zu erfassenden Objektstruktur und anderer Faktoren $\vec{b}(\vec{x})$, die die nicht-linearen Bedingungen repräsentieren. Der Vektorpfeil über $\vec{b}$ soll andeuten, dass es sich um mehrere

Bedingungen oder Eigenschaften $b_i$ handeln kann. Ein wichtiger Faktor $b_i$ ist die am Ort $\vec{x}$ eingestrahlte Lichtintensität $Bel(\vec{x})$. Andere Faktoren werden unten beispielhaft genannt. Gemäß Gleichung (4) wird $I_{em}(\vec{x})$ als Taylor-Reihe mit konstanten Koeffizienten $c_i$ angenähert ausgedrückt:

$$I_{em}(\vec{x}) \cong c_0 + c_1 \cdot Obj(\vec{x}) + c_2 \cdot b_1(\vec{x}) + c_3 \cdot Obj(\vec{x}) \, b_1(\vec{x})$$
$$+ c_4 \cdot Obj(\vec{x})^2 \cdot b_1(\vec{x}) + c_5 \cdot Obj(\vec{x}) \cdot b_1(\vec{x})^2 + \ldots$$
$$+ c_6 \cdot Obj(\vec{x}) \cdot b_1(\vec{x})^3 + \ldots \qquad (4)$$

Zur vereinfachten Darstellung wird in Gleichung (4) nur auf eine nicht-lineare Bedingung $b_1(\vec{x})$ Bezug genommen. Anwendungsabhängig können weitere Bedingungen in den Prozess der Aussendung von Licht vom jeweiligen Objektpunkt involviert sein. In diesem Fall treten entsprechende Terme auch in der Entwicklung gemäß Gleichung (4) auf, so insbesondere auch Mischterme wie z. B. $c_{5b} \cdot Obj(\vec{x}) \cdot b_1(\vec{x}) \cdot b_2(\vec{x})$. Der Term nach $c_3$ ist gerade der in Gleichung (1) genannte Ausdruck, wenn als nicht-lineare Objektbedingung $b_1(\vec{x}) = Bel(\vec{x})$ angenommen wird. Die Fouriertransformierte der ausgesandten Lichtintensität

$$F\!\left(I_{em}\!\left(Obj(\vec{x}),\, \vec{b}(\vec{x})\right)\right)$$

enthält demnach analog zu Gleichung (1) den Term $c_3 \cdot F(Bel(\vec{x})) \otimes F(Obj(\vec{x}))$.

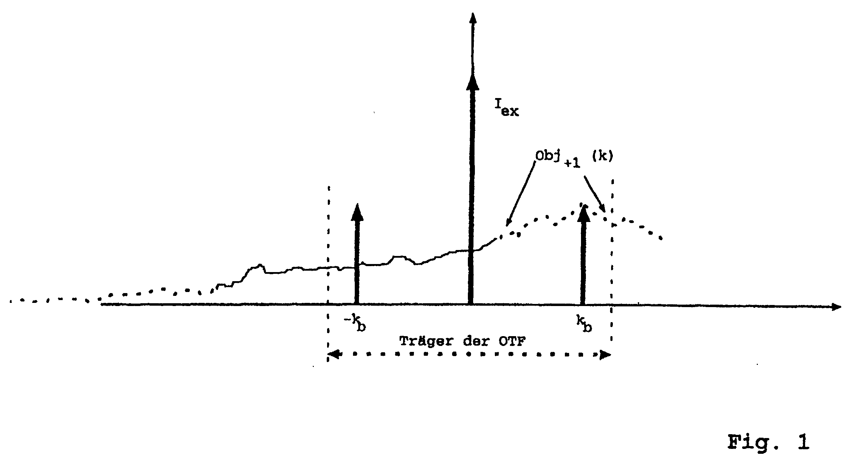

Die Fouriertranformierte der Beleuchtungsintensität $F(Bel(\vec{x}))$ ist als Summe einer Vielzahl von einzelnen $\delta$-Funktionen darstellbar. Je nach dem aktuellen Beleuchtungsmuster werden also Teile der fouriertransformierten Objektfunktion $F(Obj(\vec{x}))$ durch die Faltung mit der fouriertransformierten Beleuchtungsfunktion verschoben und mit entsprechendem Gewicht aufaddiert. Dies ist in Figur 1 illustriert.

Figur 1 zeigt die Struktur der Anregungsverteilung im reziproken Raum bei sinusförmig verteilter, <u>geringer</u> Beleuchtungsintensität entsprechend einer herkömmlichen, räumlich gemusterten Beleuchtung. Die nach oben gerichteten Pfeile bezeichnen die Maxima, die aus der sinusförmigen Anregung herrühren (Fouriertransformierte der Sinusfunktion). Zusätzlich ist die an das Maximum $k_b$ "gekoppelte" Struktur der Fouriertransformierten der Objektfunktion $F(Obj_{+1}(k))$ eingezeichnet. Die an die anderen Maxima gekoppelten Fouriertransformierten der Objektfunktion sind aus Übersichtlichkeitsgründen nicht eingezeichnet. Tatsächlich ist jedoch, da $Obj(\vec{k})$ mit den virtuellen Raumfrequenzteilen im Muster der Objektbedingungen im reziproken Raum zu falten ist, $Obj(\vec{k})$ an jedes virtuelle Maximum "gekoppelt". Nur der mittlere Teil an emittierten Raumfrequenzen (als Träger der OTF eingezeichnet) ist der Detektion zugänglich.

In Figur 1 ist beispielhaft illustriert, wie aus der Summe entsprechend der genannten Faltung durch die optische Abbildung (Multiplikation mit der raumfrequenzbegrenzten OTF) der detektierbare Bereich festgelegt ("ausgestanzt") wird. Der Bereich detektierbarer Objekt-Raumfrequenzen wird bei Beleuchtung mit einem bestimmten Muster deutlich gegenüber dem Fall einer gleichmäßigen Beleuchtung erweitert. Mit den unten erläuterten Rekonstruktionsverfahren lassen sich die verschobenen Objekt-Raumfrequenzen wieder zu einem konsistenten Bild zusammensetzen.

Entsprechend Gleichung (4) liefern im nicht-linearen Fall aber auch Terme höherer Ordnung in $b_1(\vec{x})$ Beiträge zu $I_{em}$ wie z. B. die Terme mit den Faktoren $c_5$ bzw. $c_6$. Die Fouriertransformierten dieser Terme sind auch in

$$F\!\left(I_{em}\!\left(Obj(\vec{x}),\, \vec{b}(\vec{x})\right)\right)$$

enthalten. Mit $b_1(\vec{x}) = Bel(\vec{x})$ erhält man im Ausdruck (2) auch den Term $c_5 \cdot [F(Bel(\vec{x})) \otimes F(Bel(\vec{x}))] \otimes F(Obj(\vec{x}))$. Mit einem gewissen Anteil im Bild ist es jetzt möglich, Raumfrequenzen des Objekts zu messen, die vorher noch nicht zugänglich waren, da sie durch die Faltung mit der raumfrequenzbegrenzten Funktion $F(Bel(\vec{x}))$ noch nicht in den mittels OTF detektierbaren Bereich geschoben werden konnten. Die Ausdehnung des Trägers von $F(Bel(\vec{x})) \otimes F(Bel(\vec{x}))$ kann nun aber entsprechend größer sein, wodurch sich auch höhere Raumfrequenzen in den der OTF entsprechenden Bereich verschieben und so in der Abbildung messbar sind. Weitere höhere Ordnungen wirken sich entsprechend in weiteren Faltungen mit den Fouriertransformierten der $b_i(\vec{x})$ aus, so dass noch höhere Objekt-Raumfrequenzen detektierbar sind. Im Prinzip ist es möglich, beliebig hohe Raumfrequenzen des Objekts zu detektieren und damit die Auflösung beliebig zu erhöhen, soweit entsprechende Koeffizienten in der Reihenentwicklung gemäß Gleichung (4) vorhanden sind. In der Praxis wird die bei der Rekonstruktion erzielbare Auflösung jedoch oft durch das bei den hohen Objekt-Raumfrequenzen erreichbare Signal-Rausch-Verhältnis begrenzt.

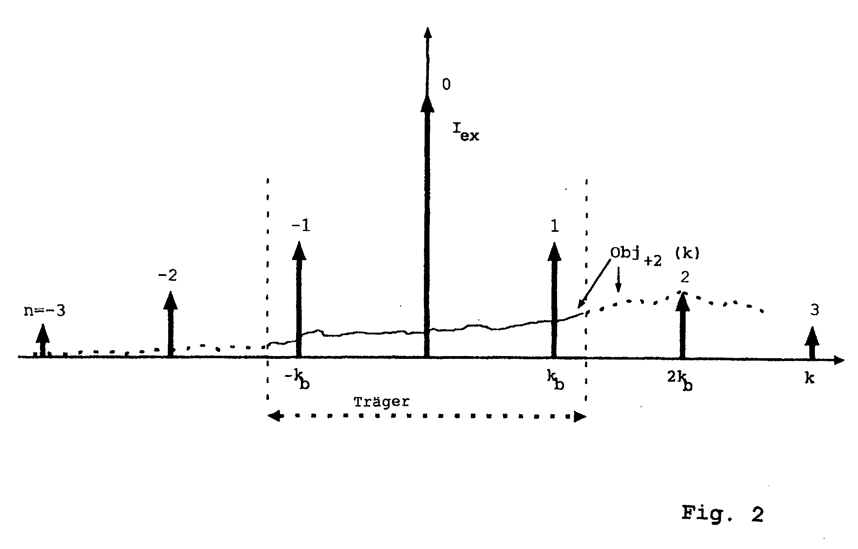

Das effektive Auftreten nieder- und höherfrequenter Komponenten des Beleuchtungsmusters im reziproken Raum ist in Figur 2 am Beispiel der Fluoreszenzmikroskopie dargestellt. Wird das Objekt mit einer genügend hohen Beleuchtungsintensität bestrahlt, so ergibt sich eine nicht-lineare Abhängigkeit der Fluoreszenzemission von der Anregungsintensität (Sättigung der Fluoreszenz) und damit ein Muster der Anregbarkeit von Fluoreszenz (im Folgenden: Anregungsmuster) eines bestimmten Farbstoffes, das grundsätzlich aus unendlich vielen (virtuellen) Maxima im reziproken Raum besteht, deren absolute Höhe allerdings mit steigendem $|\vec{k}|$ schnell abnimmt. Wie oben am Beispiel der relativ schwachen Anregungsintensität (linearer Fall, Figur 1) erläutert, ist die Objektfunktion an jede der Komponenten der Beleuchtungsfunktion gekoppelt. In einem als Teilbild $I_{em}$ aufgenommenem Detektorsignal sind also alle Informationen, insbesondere über die interessierenden hochfrequenten Ortsfrequenzen der Objektfunktion enthalten. Die Rückgewinnung dieser Informationen wird unten in Zusammenhang mit der Bildrekonstruktion beschrieben.

Figur 2 illustriert die Struktur der Anregungsverteilung im reziproken Raum bei einem <u>nicht-linear</u> verzerrten Anregungsmuster. Zu dem virtuellen Maximum n = +2 entsprechend $2k_b$ ist eine gekoppelte Struktur der Fouriertransformierten der Objektfunktion eingezeichnet

$$\left(\mathrm{Obj}_{+2}(\vec{k})\right).$$

Praktisch ist $\mathrm{Obj}(\vec{k})$ wiederum an jedes Maximum gekoppelt (aus Übersichtlichkeitsgründen nicht dargestellt) und mit verschobenen, unterschiedlich intensiven und phasengedrehten Versionen von sich selbst überlagert. Nur der mittlere Teil an emittierten Raumfrequenzen (Träger der OTF) ist der Detektion zugänglich.

Das Ziel der optischen Abbildung ist die Gewinnung einer Objektabbildung, d. h. der das Objekt beschreibenden Funktion $\mathrm{Obj}(\vec{x})$. Diese Funktion muss aus den gemessenen Teilbildern $I_m$ rekonstruiert werden. Die Rekonstruktion der Objektabbildung basiert darauf, dass die Faktoren $b_i(\vec{x})$ aus den Teilbildern $I_m$ extrahiert werden oder unabhängig von der Bildaufnahme bekannt sind. Die erfindungsgemäße Unterscheidung der Faktoren $b_i(\vec{x})$ von der das Objekt beschreibenden Funktion $\mathrm{Obj}(\vec{x})$ erfolgt, indem die Faktoren $b_i$, d. h. die oft räumlich gemusterten Objektbedingungen, variiert werden.

Die Variation der Objektbedingungen kann auf verschiedene Arten erfolgen. Eine erste Möglichkeit besteht darin, $b_i(\vec{x})$ als ein räumliches Muster auszubilden, das am Objekt zur Aufnahme verschiedener Teil- oder Einzelbilder jeweils verschoben wird. Alternativ ist es aber auch möglich, die Stärke des Musters (Kontrast der eingestellten Objektbedingungen am gesamten Objekt) oder die Form des Musters jeweils für die Aufnahme von Teilbildern zu verändern. In jeden Falle werden die in der Entwicklung gemäß Gleichung (4) gezeigten Komponenten unterscheidbar.

Die Bilderfassung des erfindungsgemäßen Erfahrens basiert auf der Aufnahme von mindestens zwei Teilbildern mit verschiedenen Objektbedingungen, unter denen die Faktoren $b_i(\vec{x})$, mit denen die erfasste Lichtintensität in nicht-linearem Zusammenhang steht, variiert werden. Die Rekonstruktion der Objektabbildung aus den Teilbildern wird im Folgenden erläutert.

## Rekonstruktion der Objektabbildung

Gemäß einer bevorzugten Ausführungsform der Erfindung werden die in der Taylor-Entwicklung gemäß Gleichung (4) enthaltenen Terme, soweit sie einen messbaren Einfluss besitzen, durch das Lösen eines Gleichungssystems ermittelt und so voneinander getrennt. Das Gleichungssystem, dessen Ermittlung unten im Einzelnen erläutert ist, lässt sich trotz der Multiplikation mit der OTF an jedem Punkt im Bereich des Trägers der OTF im reziproken Raum bestimmen und im Prinzip lösen. Durch Verschiebung in Fourierraum (oder durch Multiplikation mit $\exp(i\vec{\Delta k}\vec{x})$ im Ortsraum, $\vec{\Delta k}$: Frequenzraum-Verschiebevektor) können die individuellen Komponenten dann so zusammengesetzt werden, dass sich ein hochauflösendes Bild ergibt. Dieses kann ggf. mit weiteren Dekonvolutionstechniken verarbeitet werden, um die Bildqualität weiter zu steigern.

Wie schon aus US-A-5 671 085 bekannt ist, ergibt die Beleuchtung des Objekts mit einem Muster aus möglichst hohen Raumfrequenzen eine Auflösungserhöhung gegenüber der herkömmlichen Lichtmikroskopie. Durch die erfindungsgemäße Ausnutzung eines nicht-linearen Zusammenhangs zwischen der Stärke eines Musters, z. B. Werten bestimmter Objektbedingungen, an einem Objektpunkt und der von diesem Objektpunkt ausgehenden (emittierten bzw. gestreuten) Lichtintensität ist es möglich, ein Bild mit einer noch höheren Ortsauflösung zu berechnen.

Ein Beispiel für die Bildung eines Musters von Objektbedingungen ist bei der Anregung von Fluoreszenz mit einer ortsabhängigen Verteilung intensiven Anregungslichts gegeben. Die nicht-lineare Abhängigkeit des vom Detektor erfassten Lichts kann z. B. durch die Sättigung der Anregung von im Objekt vorhandenen Fluoreszenzfarbstoffen entstehen. Besitzt das Anregungslicht eine genügend hohe Intensität, so erhält man eine nicht-linearen Zusammenhang zwischen der eingestrahlten und der emittierten Lichtintensität am betrachteten Objekt (siehe z. B. D.R. Sandison et al. in "Handbook of Biological Confocal Microscopy", Plenum Press, New York and London, 2. Auflage, 1995, Kapitel 3, Seiten 47 bis 50; und R.Y. Tsien et al. im genannten "Handbook of Biological Confocal Microscopy", Kapitel 16). Das detektierte Licht enthält nun auch Informationen über Raumfrequenzen des Objekts, die sonst nicht zugänglich wären. Allerdings enthält jedes so aufgenommene Bild eine Mischung von Anteilen hoher Raumfrequenzen, die aber dann durch Aufnahme unter unterschiedlichen Bedingungen und Verrechnung mehrerer Teilbilder getrennt und zu einem konsistenten, hochauflösenden Bild zusammengesetzt werden können.

Das Gleichungssystem zur Trennung der Komponenten der Taylor-Entwicklung gemäß Gleichung (4) wird bspw. im Fall der Fluoreszenzmikroskopie bei Beleuchtung mit einer einem Liniengitter ähnlichen Struktur mit den folgenden Schritten ermittelt.

Die Intensitätsverteilung des Anregungslichts wird bei diesem Beispiel annähernd durch eine in den positiven Bereich verschobene Sinusfunktion beschrieben. Als Fouriertransformierte ergeben sich im Idealfall punktförmige Maxima bei $\vec{k} = 0$, $\vec{k} = + \vec{k_b}$ und $\vec{k} = - \vec{k_b}$ (siehe Figur 1). Diese Maxima besitzen je nach Modulationsgrad eine bestimmte Energie und einen bestimmten Phasenwinkel in der komplexen Ebene, der von der Position bzw. der Verschiebung (Lage) des Musters des Anregungslichts abhängt. Durch den Einfluss der nicht-linearen Abhängigkeit der Fluoreszenzemission von der Anregungsintensität (Sättigung der Fluoreszenz) ergibt sich das in Figur 2 gezeigte Muster mit nieder- und höherfrequenten Komponenten im reziproken Raum, bspw. als Anregbarkeitsmuster für einen bestimmten Fluorophortyp.

Zur Rekonstruktion der Objektbildung genügt es, dass näherungsweise bei einem endlichen Raumfrequenzwert $\vec{k}_{max} = \pm m \vec{k_b}$ abgebrochen wird und in der Rechnung nur Maxima mit kleineren Raumfrequenzen berücksichtigt werden.

Wird das Anregungslichtmuster gegenüber dem Objekt verschoben, so ändern sich die jeweiligen komplexen Phasenlagen der einzelnen punktförmigen Maxima im Fourierraum. Berücksichtigt man $\pm$ m Anregungs-Maxima und das Maximum bei $\vec{k} = 0$, so benötigt man Z = 2m + 1 unter verschiedenen Bedingungen aufgenommene Bilder, um die einzelnen durch das Mikroskop abgebildeten Komponenten des Objekts, die mit dem jeweiligen Maximum gefaltet (also verschoben) sind, separieren zu können (in Figur 2 ist nur eine Komponente dargestellt). Es kann z. B. vorgesehen sein, dass Z = 5 Maxima berücksichtigt werden. Der Phasenwinkel der Maxima im Frequenzraum des Anregungsmusters bewegt sich bei Verschiebung des Musters proportional zu $n\left|\vec{k_b}\right|$, da eine Verschiebung im Raum um $\vec{\Delta x}$ einer Multiplikation im Frequenzraum mit

$$\exp\left(i \, \vec{k}\vec{\Delta x}\right)$$

entspricht. Dabei entspricht n der Nummer des jeweiligen Raumfrequenzanteils (siehe Figur 2). Werden also verschiedene Bilder (Teilbilder) $I_n(\vec{k}) = F(I_n(\vec{x}))$ des Objekts mit jeweils um ein Fünftel des Grundmusters gegeneinander verschobener Phasenlage des Beleuchtungsmusters (also auch des Anregungsmusters) aufgenommen, so ergibt sich das folgende Gleichungssystem:

$$M \cdot \begin{pmatrix} \mathrm{Obj}_0\left(\vec{k}\right) \\ \mathrm{Obj}_{+1}\left(\vec{k}\right) \\ \mathrm{Obj}_{-1}\left(\vec{k}\right) \\ \mathrm{Obj}_{+2}\left(\vec{k}\right) \\ \mathrm{Obj}_{-2}\left(\vec{k}\right) \end{pmatrix} = \mathrm{const} \cdot \begin{pmatrix} I_0\left(\vec{k}\right) \\ I_1\left(\vec{k}\right) \\ I_2\left(\vec{k}\right) \\ I_3\left(\vec{k}\right) \\ I_4\left(\vec{k}\right) \end{pmatrix}$$

$$M = \begin{bmatrix} 1 & 1 & 1 & 1 & 1 \\ 1 & \exp(i2\pi/5) & \exp(-i2\pi/5) & \exp(i4\pi/5) & \exp(-i4\pi/5) \\ 1 & \exp(i4\pi/5) & \exp(-i4\pi/5) & \exp(i8\pi/5) & \exp(-i8\pi/5) \\ 1 & \exp(i6\pi/5) & \exp(-i6\pi/5) & \exp(i12\pi/5) & \exp(-i12\pi/5) \\ 1 & \exp(i8\pi/5) & \exp(-i8\pi/5) & \exp(i16\pi/5) & \exp(-i16\pi/5) \end{bmatrix}$$

In diesem Gleichungssystem bezeichnen die $Obj_n(\vec{k})$ die zum n. Maximum des Anregungsmuster gehörenden, verschobenen komplexwertigen Komponenten des fouriertransformierten Objekts (Objekt-Raumfrequenz), die dann durch die OTF des abbildenden Systems transmittiert werden.

Die Lösung des Gleichungssystems liefert die individuellen Objektkomponenten, die zum jeweiligen Maximum des Anregungsmusters gehören. Die Lösung kann z. B. durch Invertieren der Matrix M erfolgen. Durch Multiplikation der inversen Matrix ($M^{-1}$) mit dem rechts stehenden Vektor der gemessenen Intensitäten $I_n(\vec{k})$ werden die individuellen transmittierenden Objektkomponenten ermittelt. Liegen mehr Messdaten vor als zur Lösung der Rekonstruktionsaufgabe nötig sind, so kann z. B. eine analoge, nicht quadratische oder rechteckige Matrix aufgestellt werden. Für die Berechnung der Lösung ist dann z. B. das Verfahren der pseudoinversen Matrix anwendbar, das es erlaubt, eine Lösung im Sinne der kleinsten Fehlerquote zu ermitteln.

Die Rechnung wird aufgrund der Linearität der Fouriertransformation vorzugsweise bildpunkt- oder pixelweise im Realraum ausgeführt.

Die komplexwertigen Komponenten $Obj_n(\vec{k})$ können nun um den Vektor $\vec{\Delta k}$ im Fourieraum (oder durch die o. g. entsprechende Multiplikation im Realraum) verschoben werden, so dass die jeweilige Raumfrequenz $\vec{k}$ dort zu liegen kommt, wo sie bei musterfreier, gleichmäßiger Beleuchtung gemessen werden würde. $\vec{\Delta k}$ ist hier also $-n\vec{k_b}$.

In einem weiteren Schritt ist eine Korrektur der Komponenten $Obj_n(\vec{k})$ in ihrer komplexen Phasenlage je nach gegenseitiger Phasenlage $\phi_n$ der Frequenzraum-Anregungsmaxima im Bild $I_0$ vorgesehen

$$(\text{Multiplikation mit } \exp(-i\phi_n)).$$

Anschließend werden die Komponenten $Obj_n(\vec{k})$, ggf. durch eine gewichtete Addition, zu einem konsistenten Bild (der gewünschten Objektabbildung) vereinigt. Damit wird eine Ausdehnung des Trägers der Gesamt-OTF auf einen relativ zur linearen Abbildung deutlich vergrößerten Bereich und damit eine Erhöhung des Auflösungsvermögens ermöglicht.

Die illustrierte Verschiebung von Raumfrequenzkomponenten kann in verschiedenen Raumrichtungen durchgeführt werden. Dies kann nacheinander durch unterschiedliche Orientierung des Beleuchtungsmusters oder simultan durch Beleuchtung mit einer mehrdimensionalen Struktur erfolgen. Das Auflösungsvermögen ist in ein, zwei oder drei Dimensionen vergrößerbar. Die Gesamttransferfunktion kann im Anschluss daran oder bei Zwischenschritten noch durch entsprechendes Filtern und/oder Anwenden von an sich bekannten Entfaltungstechniken verändert werden.

Die Rekonstruktion der Objektabbildung ist nicht auf die beschriebene Lösung des Gleichungssystems mit der Matrix-Methode beschränkt. Alternativ können z. B. Quadratur-Techniken (analog zu WO 98/45745) oder algebraische bzw. iterative Rekonstruktionsverfahren (Maximum Likelihood/Expectation Maximization, Maximum Entropie, Algebraic Reconstruction und dergleichen) verwendet werden.

Die Erfindung ist nicht auf die nicht-lineare Anregung von Fluoreszenzemission beschränkt. Die Verfahrensweise ist entsprechend auch mit beliebig anderen Faktoren $b_i$ implementierbar, die geeignet sind, allein für sich oder im Zusammenwirken untereinander, insbesondere im Zusammenwirken mit der Beleuchtungsintensität, die Intensität des vom Objekt ausgehenden Lichts zu beeinflussen.

Ausführungsbeispiele erfindungsgemäßer optischer Systeme

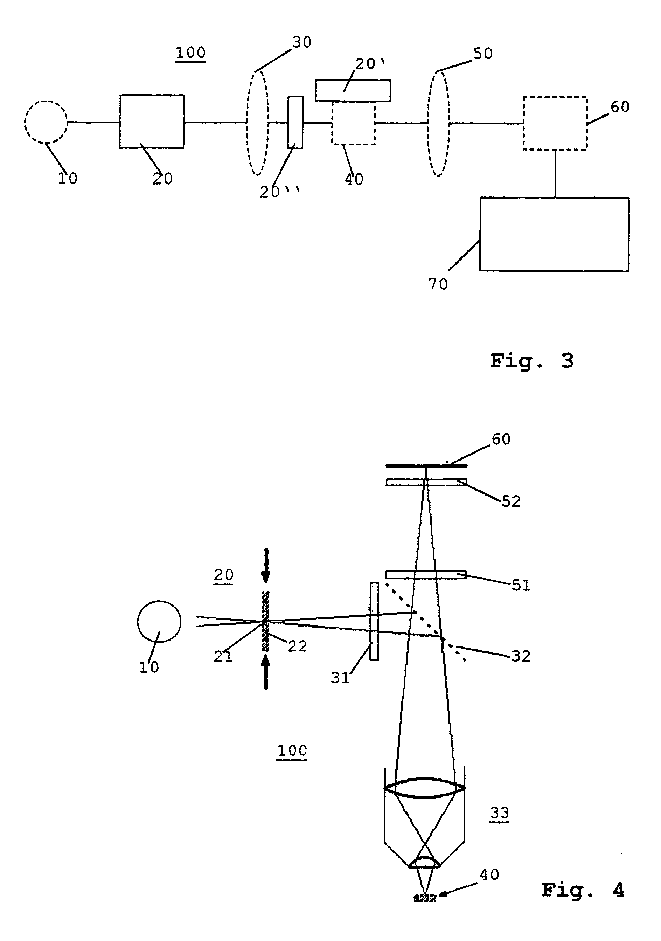

Ein erfindungsgemäßes optisches System ist in Figur 3 dargestellt. Die an sich bekannten Komponenten eines herkömmlichen Mikroskops sind mit gestrichelten Rahmen eingezeichnet. Das optische System 100 ist mit einer Beleuchtungseinrichtung 10, mindestens einem Mustergenerator 20, 20', 20'', einer Beleuchtungsoptik 30, einer Abbildungsoptik 50, einer Detektoreinrichtung 60 und einem Bildgenerator 70 aufgebaut. Das Bezugszeichen 40 bezieht sich auf die mit dem System 100 zu untersuchende Probe. Die Komponenten 10, 30, 50 und 60 können durch optische Bauteile bereitgestellt werden, wie sie aus der Lichtmikroskopie und aus der optischen Mess- und Analysetechnik, z. B. der Spektroskopie, bekannt sind. Anwendungsabhängig können die Komponenten 30 und/oder 50 entfallen oder durch ein gemeinsames Bauteil gebildet werden. Es kann auch vorgesehen sein, dass die Komponenten 20 und 30 durch ein gemeinsames optisches Bauteil gebildet werden.

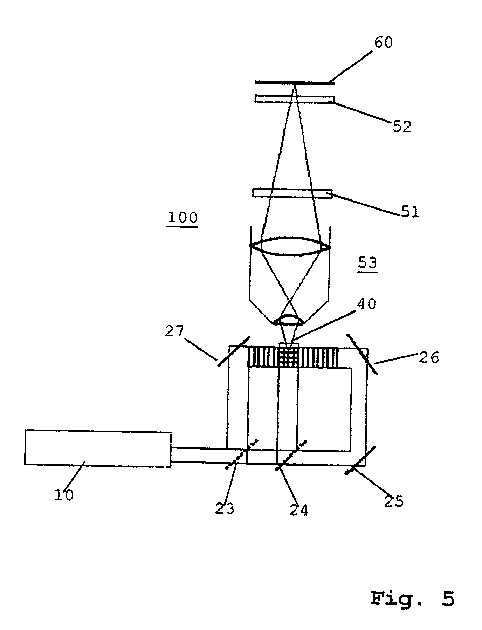

Der Mustergenerator 20, 20' und/oder 20" ist allgemein eine Einrichtung zur Bildung von Objektbedingungen mit einem vorbestimmten räumlichen Muster am Objekt 40. Anwendungsabhängig kann der Mustergenerator 20 eine Maske mit einer bestimmten ein- oder zweidimensionalen Übertragungscharakteristik entsprechend dem gewünschten Muster sein. Die Maske kann insbesondere durch ein Beugungsgitter (siehe Figur 4) (oder Phasengitter) oder eine Matrixanordnung aus einzeln ansteuerbaren Reflektor- oder Transmissionspixeln gebildet werden. Im letzteren Fall werden DMD-Einrichtungen ("Digital Mirror Device") bzw. LCD-Matrixanordnungen verwendet. Der Mustergenerator kann auch eine Spiegelanordnung zur Erzeugung eines Interferenzmusters (siehe Figur 5) oder eine Einrichtung zur unmittelbaren physikalischen oder chemischen Beeinflussung des Objekts 40 (z. B. eine Heizeinrichtung oder einen Ultraschallgeber) umfassen. Abweichend von der Komponente 20 in Figur 3 kann der Mustergenerator auch zwischen der Beleuchtungsoptik 30 und dem Objekt 40 (Komponente 20") oder unmittelbar am Objekt 40 vorgesehen sein (Komponente 20').

Der Bildgenerator enthält eine Einrichtung zur Rekonstruktion der Objektabbildung entsprechend den oben erläuterten Prinzipien. Als Bildgenerator kann ein speziell ausgelegter Schaltkreis oder auch ein entsprechend programmierter Computer verwendet werden. Der Bildgenerator kann zusätzlich Speicher-, Steuer- und/oder Anzeigekomponenten enthalten.

Figur 4 zeigt Einzelheiten eines erfindungsgemäßen optischen Systems am Beispiel eines Epifluoreszenzmikroskops 100. Die Beleuchtungseinrichtung 10 wird durch eine intensive Lichtquelle gebildet. Da zur Ausnutzung nicht-linearer Effekte hohe Lichtintensitäten benötigt werden, wird vorzugsweise eine gepulste Lichtquelle, wie z. B. ein Pulslaser oder eine Blitzlampe verwendet. Die Beleuchtungseinrichtung kann aber auch durch eine Hochdruckdampflampe (z. B. Quecksilberdampflampe) gebildet werden. Als Mustergenerator 20 (Maske) ist beispielhaft ein verstellbares und ggf. drehbares und/oder verschiebbares Beugungsgitter 22 vorgesehen, das entsprechend der Position 21 der Bildfeldblende in einer konjugierten Objektebene angeordnet ist. Das Beugungsgitter 22 ist ein Transmissionsgitter mit einem Gitterabstand von z. B. 30 µm. Das Beugungsgitter 22 ist an einem (nicht dargestellten) Stellantrieb angeordnet.

Die Beleuchtungsoptik 30 weist einen Anregungsfilter 31, einen dichroitischen Spiegel 32 zum Einkoppeln des Anregungslichts in eine Mikroskopsäule und Objektivlinsen 33. Am Ort des Objekts 40 wird ein Bild des Beugungsgitters 22 als Beleuchtung für die zu untersuchende Probe in der entsprechenden Fokusebene gebildet. Die Abbildungsoptik 50 wird wiederum durch die Objektvlinsen 33, einen Emissionsfilter 51 und einer optional vorgesehenen Optik 52 zur Bildvergrößerung gebildet. Die Detektoreinrichtung 60 ist ein CCD-Detektor, von dem auf den (nicht dargestellten) Bildgenerator Daten übertragen werden.

Beim Aufbau gemäß Figur 4 kann das Beugungsgitter 22 durch eine DMD-Einrichtung oder eine LCD-Matrixanordnung ersetzt werden, die im Lichtweg zwischen der Beleuchtungseinrichtung 10 und dem Objekt 40 angeordnet ist. In diesem Fall ist zwischen den Komponenten 20 und 40 eine zusätzliche Verkleinerungsoptik vorgesehen. Eine DMD-Einrichtung umfaßt z. B. rd. 450 · 600 Reflektorelemente mit einer Pixelgröße von rd. 17 · 17 µm$^2$.

Für die erfindungsgemäße Aufnahme mehrerer Teilbilder mit unterschiedlichen Phasenlagen wird das Beugungsgitter 22 in kleinen Schritten gegenüber dem Objekt 40 verschoben. Die Schrittweite ist von der Strukturdimension der Maske und der Zahl der aufzunehmenden Teilbilder abhängig und beträgt z. B. bei 30 µm Strukturdimension und 7 Teilbildern 30/7 µm). Alternativ kann auch bei einem feststehenden Beugungsgitter 22 eine Verschiebung des Objekts 40 vorgesehen sein, wobei dies jedoch zusätzliche Schritte der Bildkorrektur bei der Rekonstruktion der Objektabbildung erfordert. Alternativ ist es auch möglich, die Phase der verschiedenen Beugungsmaxima direkt durch geeignete optische Elemente zu beeinflussen. Die minimale Anzahl der für die Rekonstruktion des Gesamtbildes notwendigen Aufnahmen von Teilbildern ergibt sich durch die Anzahl der Unbekannten des zugehörigen Gleichungssystems (siehe oben). Es sind mindestens zwei Teilbildaufnahmen vorgesehen.

Um die Auflösung in allen Raumrichtungen zur erhöhen, wird das Objekt 40 mit Mustern unter verschiedenen Winkeln nacheinander oder mit einer Maske wie bspw. mit der DMD- oder LCD-Einrichtung mit einem zweidimensionalen Muster, das Beugungsmaxima in mehreren Richtungen der Ebene hervorruft, in verschiedenen Phasenlagen in jeder Dimension beleuchtet.

Durch Erstellen von Fokusserien kann man noch zusätzliche Informationen über die axiale Struktur des Objekts gewinnen und damit dreidimensionale Objektabbildungen ableiten. Dies wird einerseits durch die inkohärente Lichtquelle und andererseits durch das Vorhandensein der Nullpunkt-Beugungsordnung des Gitters noch zusätzlich erleichtert. Ein weiterer Auflösungsgewinn kann durch Drehen des Objekts um eine auf der optischen Achse senkrecht stehende Achse unter dem optischen System erreicht werden.

Das Objekt 40 wird mit derart Momentanintensitäten beleuchtet bzw. angeregt, dass die Farbstoffe in der Probe gesättigt werden, so dass sich die gewünschten nicht-linearen Effekte zur Erhöhung des Auflösungsvermögens ergeben. Die gesuchten Anteile der sich überlagernden individuellen Ordnungen können aus den Bildern bei verschiedenen Phasenlagen der Anregungsstruktur errechnet werden. Es ist auch möglich, aus Aufnahmen von Teilbildern mit verschiedener Beleuchtungsintensität hoch auflösende Bilder zu rekonstruieren. Unterdrückt man (z. B. durch Ausblenden) die Nullpunkt-Beugungsordnung des Beugungsgitters 21, so erhöht man damit in vorteilhafter Weise den Modulationsgrad der Beleuchtungsfunktion und damit die relative Intensität in höheren Anregungsordnungen. Außerdem kann die Energie in höhere Raumfrequenzbereiche geschoben werden.

Bei dem abgewandelten Aufbau eines Epifluoreszenzmikroskops 100 gemäß Figur 5 wird die Probe (das Objekt) 40 mit Laserlicht beleuchtet. Die Lichtquelle 10 ist vorzugsweise ein Pulslaser (z. B. mit einem optisch-parametrischen Oszillator, der mit einem frequenzverdreifachten NdYAG-Laser gepumpt ist, oder mit einem Ti-Saphir-Laser), kann aber auch durch eine andere genügend intensive Lichtquelle gebildet werden. Der Mustergenerator 20 wird durch eine Gruppe ebener Spiegel 23 - 27 gebildet, die dazu eingerichtet sind, das Anregungslicht von der Lichtquelle 10 auf verschiedene Strahlengänge zu zerlegen, die aus verschiedenen Richtungen auf das Objekt 40 treffen. Das Anregungslicht wird mit dem teildurchlässigen Spiegel 23 und die voll reflektierenden Spiegel 25 - 27 von zwei entgegengesetzten Seiten auf das Objekt 40 gerichtet. Optional kann der zweite teildurchlässige Spiegel 24 vorgesehen sein, um einen dritten Anregungslichtweg zum Objekt 40 zu bilden. Es ergeben sich drei miteinander interferierende Anregungs-Lichtstrahlen, die eine Verwendung des Mikroskops 100 in der höchstauflösenden 3D-Mikroskopie erlauben. Für zweidimensionale Anwendungen kann auf den Spiegel 24 verzichtet werden. Die Strahlen interferieren über einen Bereich der in der Größenordnung der Kohärenzlänge der Lichtquelle 10 liegt.

Zur Veränderung der Objektbedingungen (Interferenzmuster am Objekt 40) zur Aufnahme verschiedener Teilbilder sind mindestens zwei Spiegel verschiebbar angeordnet. Bspw. ist vorgesehen, dass die Spiegel 24 und 25 zur Änderung des Interferenzmusters verschiebbar sind. Alternativ ist zur Veränderung der Objektbedingungen mindestens ein elektrooptisches Element zur Änderung der Phasenlage des Beleuchtungslichts in einem der Teil-Lichtwege vorgesehen.

Die Beleuchtungsoptik 30 ist in Figur 5 aus Übersichtlichkeitsgründen nicht dargestellt, kann aber ggf. bauformabhängig ohnehin weggelassen werden. Die Abbildungsoptik 50 umfasst die Objektivlinsen 53, den Emissionsfilter zur Absorption des Anregungslichts 51 und optional eine Optik 52 zur Bildvergrößerung. Als Detektor ist wiederum ein CCD-Detektor 60 vorgesehen.

Um ein gute axiale Diskriminierung zu erhalten, kann das Anregungslicht zugleich noch aus einer oder mehreren Richtungen durch das (nicht dargestellte) Objektiv und/oder von der dem Objektiv abgewandten Seite auf das Objekt 40 fallen, das sich im Differenzbereich der Anregungslichtstrahlen (kreuz schraffierte Region) befindet. Die durch Nicht-Linearitäten erzielbare zusätzlich Auflösungserhöhung kann wiederum durch Benutzung entsprechend starker Laser bzw. gepulster Laser mit hohen Momentanintensitäten erreicht werden. Auch die Verwendung anderer intensiver Lichtquellen (z. B. Blitzlicht) ist möglich und ggf. vorteilhaft.

Zur Durchführung des erfindungsgemäßen Verfahrens werden mehrere Teilbilder jeweils mit verschiedenen Interferenzmustern am Objekt 40 aufgenommen und nach den oben erläuterten Prinzipien zur Gewinnung der Objektabbildung verarbeitet.

Die erläuterten Ausführungsbeispiele basieren auf der Ausnutzung der nicht-linearen Abhängigkeit des erfassten Lichtes von der Intensität des Anregungslichts durch Sättigung von Fluoreszenzfarbstoffen. Alternative nicht-lineare Effekte sind durch die Sättigung der Absorption von Anregungslicht unter intensiver Beleuchtung, die Abhängigkeit der Phase des emittierten oder gestreuten Lichts von der im Objekt vorhandenen Beleuchtungsintensität, die sich im Detektor (z. B. über Interferenz) oder vor diesem in einer nicht-linearen Intensitätsabhängigkeit umsetzt, SHG- oder THG-Prozesse, eine Abhängigkeit der Lichteigenschaften der Ramanstreuung vom Wert einer oder mehrerer Objektbedingungen, zeitlich kohärente Effekte (z. B. Rabi-Oszillationen) an Atomen oder Molekülen im Objekt, CARS-Prozesse, Mehrphotonen-Absorptionen, stimulierte Emissionen im Objekt, die Besetzung langlebiger Anregungszustände oder chemisch veränderter Zustände in den Fluorophoren vor oder während der Beleuchtung, strahlungslose Energietranferprozesse und/oder physikalische oder chemische Objektbedingungen gegeben.

Insbesondere zur Ausnutzung zeitlich kohärenter Effekte (Rabi-Oszillationen) an Atomen oder Molekülen oder Fluorophoren im Objekt (in Lösung, in Festkörpern, in Gasen oder auch unter Vakuumbedingungen) werden vorzugsweise Beleuchtungseinrichtungen mit extrem kurzen Pulslängen (z. B. <100 fs) verwendet. Basiert der nicht-lineare Effekt auf der stimulierten Emission so wird diese gleichzeitig oder in zeitlicher Abfolge induziert. Die stimulierte Emission kann bei der selben Wellenlänge wie der des Anregungslichts oder auch bei anderen Wellenlängen, z. B. bei einer typischen Fluoreszenzwellenlänge, induziert werden. Die Ausnutzung von Energietransferprozessen bedeutet, dass Energie der Anregungsstrahlung stahlend oder strahlungslos von Fluorophoren auf benachbarte Fluorophor-Moleküle übertragen wird und dadurch eine multi-lineare Abhängigkeit der emittierten Lichtintensität von der am Nachbarort eingestrahlten Intensität entsteht.

Zu den physikalischen oder chemischen Änderungen der Objektbedingungen zählt insbesondere die Ausnutzung der nicht-linearen Abhängigkeit des von den Objektpunkten ausgehenden Lichts von einem räumlich inhomogenen elektrischen oder magnetischen Feld oder vom am Objektpunkt herrschenden Druck, Scherkräften oder mechanischen Spannungsverhältnissen. Es kann auch ein am Objekt gebildeter Temperaturgradient entsprechend einem bestimmten Muster vorgesehen sein, der die gewünschte multi-lineare Abhängigkeit des vom Objektpunkt ausgehenden Lichts von der jeweils herrschenden Temperatur herstellt. Es kann auch eine multi-lineare Abhängigkeit des vom Objektpunkt ausgehenden Lichts von den dort herrschenden chemischen Bedingungen (z. B. pH-Wert) verwendet werden. Zusätzlich kann eine Objektbestrahlung mit Radiowellen, Mikrowellen, Infrarotlicht, Röntgenstrahlung oder auch Schallwellen oder Ultraschallwellen ausgenutzt werden.

Zur Realisierung der genannten Effekte ist der Mustergenerator entsprechend angepasst. Bspw. kann der Mustergenerator eine zusätzliche Bestrahlungseinrichtung umfassen, deren Emission auf das Objekt fokussiert ist.

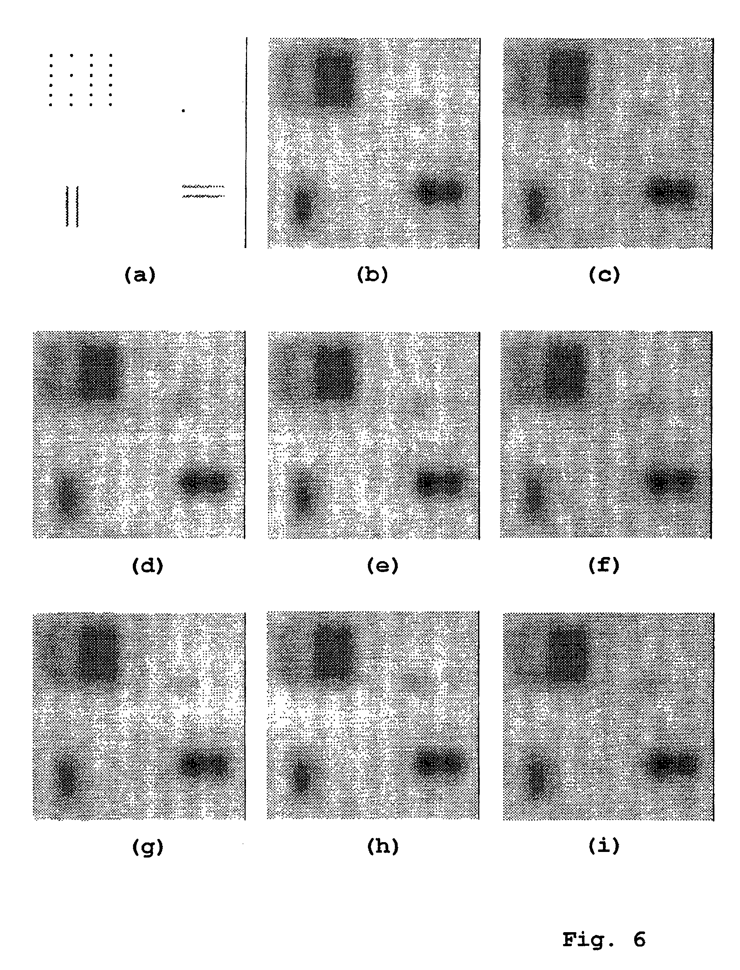

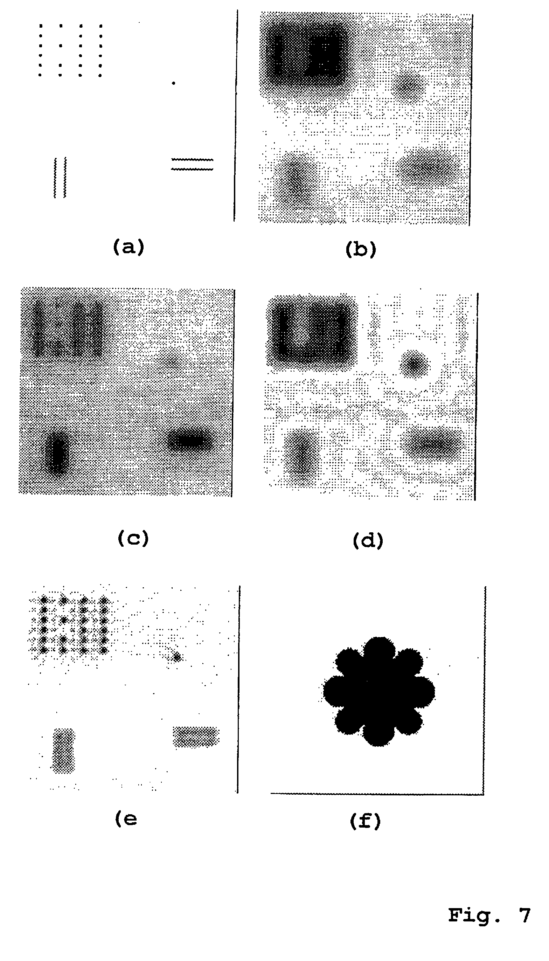

Die Figuren 6 und 7 illustrieren Simulationsergebnisse zum Einsatz eines Fluoreszenzmikroskops gemäß Figur 4. Die Lichtintensität ist hier als Schwärzung dargestellt. Aus drucktechnischen Gründen ist die Bildqualität eingeschränkt. Zur besseren Sichtbarmachung der Beleuchtung wurde im Objekt (Figur 6a, 7a) eine konstante Hintergrundfluoreszenz angenommen. Figur 6a zeigt das simulierte Objekt, dessen Beleuchtung mit dem beschriebenen Verfahren und Abbildung mit einem Epifluoreszenzmikroskop simuliert wurde. Die Teilbilder b-h repräsentieren Simulationen von jeweils mit verschiedenen Phasen des beleuchtenden Streifenmusters aufgenommenen Teilbildern. Figur 6i zeigt ein Beispiel, bei dem auch die Richtung des beleuchtenden Musters verändert wurde. Die Anregungsintensität war bei diesen Simulationen um den Faktor 5 größer als die Sättigungsintensität. Die maximal erwartete Photonenzahl betrug 560 Photonen/Pixel in den Einzelbildern. Figur 7 zeigt die zugehörigen Rekonstruktionsergebnisse. Figur 7a wiederholt das Originalbild der Simulation. Nach Faltung mit der Punktbildfunktion eines simulierten Mikroskops und einer Poisson-verteilten Verrauschung (Max = 560 Photonen) ergibt sich das Bild Figur 7b. Die erfindungsgemäße Rekonstruktion aus Teilbildern, die analog zu den Figuren 6b bis 6h mit Beleuchtungsmustern unter 3 Drehwinkeln simuliert wurden, ist in Figur 7c gezeigt. Dabei ist keine Verstärkung hoher Raumfrequenzen vorgenommen wurden. Erfolgt zusätzlich die dem System eigene Hochfrequenzverstärkung, so ergibt sich aus Figur 7c das Bild gemäß Figur 7e. Die Anwendung einer entsprechenden Hochfrequenzverstärkung bei dem (konventionellen) Bild gemäß Figur 7b würde lediglich ein Bild mit gemäß Figur 7d ergeben. Der Vergleich der Bilder Figur 7e und Figur 7d zeigt die Überlegenheit des erfindungsgemäßen Verfahrens der Rekonstruktion hoher Raumfrequenzen aus der Aufnahme mehrerer Teilbilder. Figur 7f illustriert den zugehörigen simulierten Träger der mit dem Verfahren erreichten OTF bei einer berücksichtigten Anzahl von Z=7 Maxima.

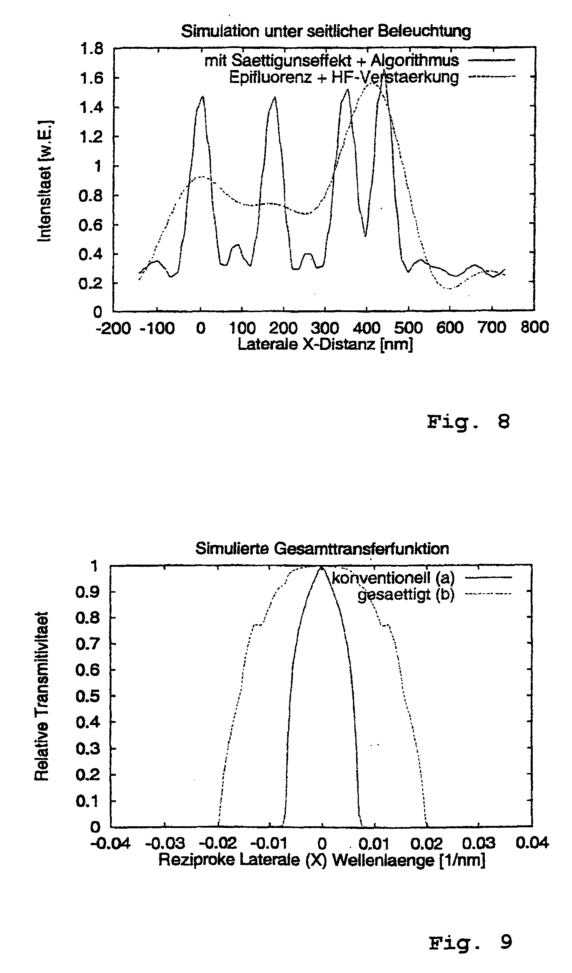

Figur 8 illustriert die Verbesserung des Auflösungsvermögens mit dem erfindungsgemäßen Verfahren. Es ist die Intensität auf einer Bezugslinie entlang der zweiten senkrechten Spalte in der Punktmatrix (links oben im Originalbild) in den Figuren 7d und 7e dargestellt. Die durchgezogene Linie entspricht dem Ergebnis des erfindungsgemäßen Verfahrens. Die Einzelpunkte sind deutlich als Maxima erkennbar. Mit dem herkömmlichen Verfahren (Epifluoreszenz mit nachfolgender Hochfrequenzverstärkung) ist nur der erste Punkt (teilweise) und ein Maximum zwischen den beiden untersten Punkten erkennbar. Bei der simulierten Abbildung eines Punktes ergibt sich eine Verbesserung des Auflösungsvermögens um einen Faktor von mehr als 3.

Figur 9 zeigt einen lateralen Schnitt durch die simulierte effektive optische Transferfunktion des Gesamtsystems gemäß Figur 4. Der Gitterabstand des Beugungsgitters wurde hier so gewählt, dass nur die Beugungsordnungen 0, +1 und -1 des Beugungsgitters durch das Objektiv übertragen werden können. Durch die teilweise Sättigung der beteiligten Farbstoffe ergibt sich eine nicht-lineare Beziehung zwischen der Anregungsintensität und der Wahrscheinlichkeit der Anregung eines Farbstoffmoleküls an einem Punkt im Objektraum. Diese räumlich variierende Anregungswahrscheinlichkeit wird auch als Anregungsmuster bezeichnet. Wenn man annimmt, dass die Anregungswahrscheinlichkeit für ein bestimmtes Farbstoffmolekül eine Funktion der Anregungsintensität ist, so führt eine Nicht-Linearität dieser Funktion dazu, dass im Emissionsmuster auch räumlich höhere Harmonische des Anregungsmusters auftreten. Maxima im reziproken Raum, die jenseits der durch die Abbe-Grenze gegebenen Raumfrequenzbegrenzung liegen, können dann im Anregungsmuster auftreten. Die raumfrequenzbegrenzte Abbildung der Multiplikation der Farbstoffverteilung mit dem Anregungsmuster enthält nun Komponenten analog zu einer linearen Anregung mit einem Muster, welches höhere Raumfrequenzen enthält.

In Figur 9 ist im Einzelnen zu erkennen, dass die Transferfunktion bei einer herkömmlichen Abbildung mit einem Mikroskopobjektiv (mit nachfolgender Anwendung einer Hochfrequenzverstärkung) entsprechend der durchgezogenen Linie relativ schmal ist, wohingegen die Transferfunktion bei Anwendung der gesättigten Beleuchtung (mit einer Hochfrequenzverstärkung) erheblich erweitert wird (gestrichelt gezeichnet).

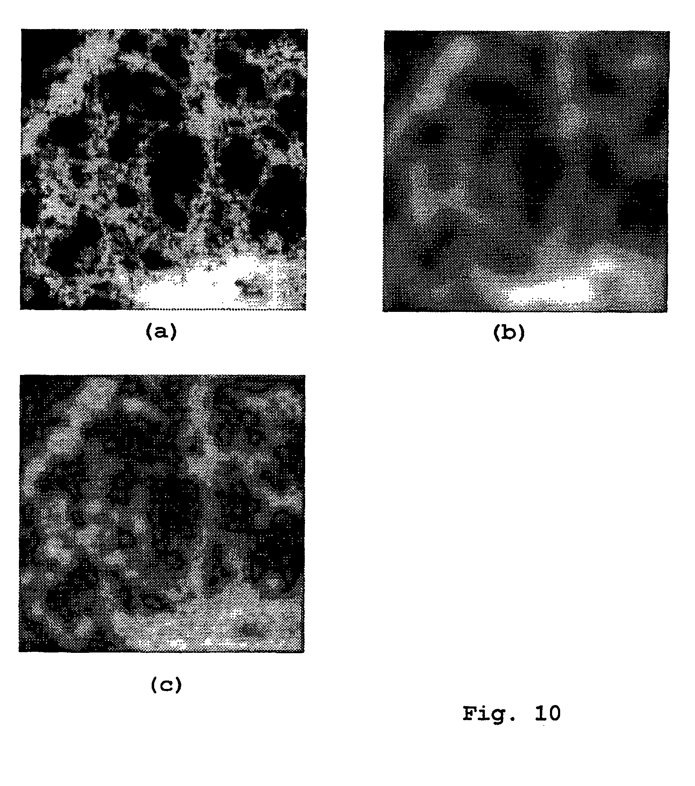

Figur 10 zeigt eine simulierte Anwendung des erfindungsgemäßen Verfahrens auf ein mittels Elektronenmikroskopie aufgenommenes Schnittbild des Zellkerns einer embryonalen Bovin-Zelle. Figur 10a illustriert den invertierten elektronenmikroskopischen Ausschnitt nahe der Kernhülle mit der Kernmatrix ("Nuclear Matrix"). Die simulierte epifluoreszenzmikroskopische Aufnahme mit Entfaltung ergibt das in Figur 10b gezeigt herkömmliche Bild. Bei Anwendung des erfindungsgemäßen Verfahrens ergibt sich das in Figur 10c gezeigte Bild. Das mit der Methode der gesättigten lateralen Modulation aufgenommene und ausgewertete und anschließend entfaltete Bild (Maximum: 560 Photonen im Einzelbild) ist gegenüber dem herkömmlichen Bild deutlich verbessert und mit dem elektronenmikroskopischen Originalbild vergleichbar.

**Patentansprüche**

1.  Verfahren zur Gewinnung einer Objektabbildung mindestens eines Objekts (40), wobei mindestens zwei Teilbilder des Objekts (40) unter jeweils verschiedenen Objektbedingungen aufgenommen werden, die am Objekt mit räumlichen Mustern ausgebildet sind, und aus den Teilbildern die gewünschte Objektabbildung ermittelt wird, **dadurch gekennzeichnet, dass** die räumlichen Muster so ausgebildet sind, dass die Teilbilder unterschiedliche Beiträge verschiedener Raumfrequenzanteile der Objektstruktur enthalten und jeweils für einen Objektpunkt eine nicht-lineare Abhängigkeit des vom Objektpunkt her detektierten Lichtes von den am Objektpunkt gegebenen Bedingungen besteht, und die Ermittlung der Objektabbildung unter Ausnutzung der nicht-linearen Abhängigkeit des detektierten Lichtes von den jeweiligen Objektbedingungen erfolgt.

2.  Verfahren gemäß Anspruch 1, bei dem räumliche Muster mindestens einer Objektbedingung gebildet werden, für die jeweils die nicht-lineare Abhängigkeit des vom Objektpunkt ausgehenden und detektierten Lichtes besteht.

3.  Verfahren gemäß Anspruch 1, bei dem räumliche Muster von mindestens zwei Objektbedingungen gebildet werden, für die eine Abhängigkeit des detektierten Lichtes von einer multiplikativen Verknüpfung der Objekteigenschaften und eine lineare oder eine nicht-lineare Abhängigkeit des detektierten Lichtes von jeder der Objektbedingungen besteht.

4.  Verfahren gemäß einem der vorhergehenden Ansprüche, bei dem das räumliche Muster durch ein Muster einer Beleuchtungsintensität am Objekt (40) gegeben ist und das Objekt (40) mit dem Muster der Beleuchtungsintensität so beleuchtet wird, dass eine nicht-lineare Abhängigkeit der an einer Detektoreinrichtung (60) erfassten, von einem Objektpunkt ausgehenden Lichtintensität zu der an diesem Objektpunkt gegebenen Beleuchtungsintensität besteht.

5.  Verfahren gemäß einem der vorhergehenden Ansprüche, bei dem die nicht-lineare Abhängigkeit des erfassten Lichts durch eine Sättigung von Fluoreszenzlicht von Fluorophoren unter intensiver Beleuchtung, eine Sättigung der Absorption von Beleuchtungslicht unter intensiver Beleuchtung, eine Abhängigkeit der Phase des emittierten oder gestreuten Lichtes von der im Objekt vorhandenen Beleuchtungsintensität, SHG- oder THG-Prozesse, eine Abhängigkeit der Lichteigenschaften der Ramanstreuung vom Wert einer oder mehrerer Objekteigenschaften, zeitlich kohärente Effekte an Atomen oder Molekülen im Objekt (40), eine Mehrphotonenabsorption, CARS-Prozesse, eine stimulierte Emission, eine Besetzung langlebiger Zustände oder chemisch veränderter Zustände, strahlende oder strahlungslose Energietransferprozesse von Fluorophoren auf benachbarte Fluorophore, am Objektpunkt gegebene räumlich inhomogene elektrische oder magnetische Felder, am Objektpunkt gegebene Drücke, Scherkräfte oder mechanische Spannungsverhältnisse, am Objektpunkt gegebene Temperaturen, am Objektpunkt gegebene chemische Verhältnisse und/oder zusätzliche Objektbestrahlungen mit elektromagnetischen Strahlen oder Schallwellen gebildet wird.

6.  Verfahren gemäß einem der vorhergehenden Ansprüche, bei dem das räumliche Muster einer Objektbedingung im reziproken Raum durch eine Anzahl von Punkten, die in einer, zwei oder drei Dimensionen verteilt sind, beschrieben oder annähernd beschrieben werden kann bzw. im Ortsraum räumlich periodisch oder näherungsweise periodisch in einen oder mehreren Dimensionen gebildet wird.

7.  Verfahren gemäß einem der vorhergehenden Ansprüche, bei dem zur Einstellung verschiedener Objektbedingungen das Objekt und das räumliche Muster in einer oder mehreren Richtungen relativ zueinander verschoben werden.

8.  Verfahren gemäß Anspruch 7, bei dem das Muster durch eine Maske oder durch Interferenz erzeugt wird und eine Verschiebung des Musters durch Verschiebung der Phase verschiedener Beugungsmaxima erzielt wird.

9.  Verfahren gemäß einem der vorhergehenden Ansprüche, bei dem die Objektbedingungen entsprechend einer vorbestimmten zeitlichen Struktur verändert und die Teilbilder zu unterschiedlichen Zeiten aufgenommen werden.

10. Verfahren gemäß Anspruch 9, bei dem zur Erzeugung verschiedener Objektbedingungen die Beleuchtungsintensität variiert wird.

11. Verfahren gemäß einem der vorhergehenden Ansprüche, bei dem die Rekonstruktion der Objektabbildung aus den Teilbildern durch Lösung eines Gleichungssystems unter Berücksichtigung der nicht-linearen Abhängigkeiten oder durch eine iterative Verfahrensweise erfolgt.

**12.** Verfahren gemäß einem der vorhergehenden Ansprüche, bei dem die Position des Objekts oder eines oder mehrerer Teilobjekte des Objekts (40) ermittelt werden.

**13.** Verfahren gemäß einem der vorhergehenden Ansprüche, bei dem die Rekonstruktion der Objektabbildung unter Berücksichtigung einer vorbekannten Struktur des Objekts (40) oder von Teilen des Objekts (40) erfolgt.

**14.** Optisches Abbildungssystem (100) mit:

- einer Beleuchtungseinrichtung (10) und einer Detektoreinrichtung (60), die dazu eingerichtet sind, ein Objekt (40) zu beleuchten bzw. eine Abbildung des Objekts (40) oder von Teilen des Objekts (40) aufzunehmen,
- mindestens einem Mustergenerator (20, 20', 20'') zur Erzeugung mindestens eines veränderlichen räumlichen Musters von Objektbedingungen am Objekt (40), wobei die Beleuchtungseinrichtung (10) und/oder der Mustergenerator (20, 20', 20'') dazu eingerichtet sind, Objektbedingungen zu erzeugen, von denen das mit der Detektoreinrichtung (60) detektierbare Licht abhängig ist, und
- einem Bildgenerator (70) zur Rekonstruktion einer Objektabbildung aus Teilbildern, die mit der Detektoreinrichtung (60) aufgenommen worden sind,

**dadurch gekennzeichnet, dass**

- die Beleuchtungseinrichtung (10) und/oder der Mustergenerator (20, 20', 20'') dazu eingerichtet sind, Objektbedingungen zu erzeugen, von denen das detektierbare Licht nicht-linear abhängig ist, und
- der Bildgenerator (70) zur Rekonstruktion der Objektabbildung unter Verwendung der nicht-linearen Abhängigkeit des detektierbaren Lichtes von den Objektbedingungen ausgelegt ist.

**15.** Optisches System gemäß Anspruch 14, bei dem der Mustergenerator (20, 20', 20'') eine Maske umfasst, mit der auf dem Objekt (40) ein räumliches Muster einer Beleuchtungsintensität gebildet werden kann.

**16.** Optisches System gemäß Anspruch 15, bei dem die Maske ein mehrdimensionales Beugungsgitter (22), ein Phasengitter, eine DMD-Einrichtung oder eine LCD-Matrix umfasst.

**17.** Vorrichtung gemäß Anspruch 15 oder 16, bei dem die Maske und die Probe (40) relativ zueinander verschiebbar und/oder drehbar angeordnet sind.

**18.** Optisches System gemäß Anspruch 14, bei dem der Mustergenerator (20, 20', 20'') eine Spiegelanordnung (23 - 27) umfasst, die zur Erzeugung eines Interferenzmusters auf dem Objekt (40) eingerichtet ist.

**19.** Optisches System gemäß Anspruch 14, bei dem der Mustergenerator (20, 20', 20'') einen Einrichtung zur Einstellung vorbestimmter physikalischer oder chemischer Bedingungen am Objekt (40) entsprechend dem räumlichen Muster umfasst.

**20.** Optisches System gemäß Anspruch 14, bei dem eine Verstelleinrichtung zu Verschiebung des Objekts (40) im räumlichen Muster der Objektbedingungen vorgesehen ist.

**21.** Optisches System gemäß einem der Ansprüche 14 bis 20, bei dem die Beleuchtungseinrichtung (10) eine Blitzlampe, einen Laser oder eine Hochdrucklampe umfasst.

**22.** Optisches System gemäß einem der Ansprüche 14 bis 21, bei dem eine Beleuchtungsoptik (30) und/oder eine Abbildungsoptik (50) vorgesehen sind.

**23.** Verwendung eines Verfahrens oder eines optischen Systems gemäß einem der vorhergehenden Ansprüche in Kombination mit optischen Mikroskopieverfahren beziehungsweise entsprechende Mikroskopieanordnung, insbesondere in Kombination mit der Standard-Fernfeldmikroskopie, der Epifluoreszenzmikroskopie, der Konfokalmikroskopie, der 4Pi-Mikroskopie, der Theta-Mikroskopie, der Nahfeldmikroskopie, mikroskopischen $I^2M$-, $I^3M$- und $I^5M$-Verfahren, STED-Verfahren, Multiphotonenmikroskopie, CARS-Verfahren und SHG- oder THG-Mikroskopie.

**Claims**

1. Method for obtaining an object image of at least one object (40), at least two partial images of the object (40) being taken under respectively different object conditions, which are formed with spatial patterns at the object and the desired object image being determined from the partial images,
**characterised in that**
the spatial patterns are configured such that the partial images contain various contributions of different spatial frequency components of the object structure and
there exists respectively for one object point a non-linear dependency of the detected light from the object point upon the conditions prevailing at the object point, and
the determination of the object image is effected by use of the non-linear dependency of the detected light upon the respective object conditions.

2. Method according to claim 1, in which spatial patterns are formed from at least one object condition, for which there exists respectively the non-linear dependency of the light which originates from the object point and is detected.

3. Method according to claim 1, in which the spatial patterns are formed from at least two object conditions, for which there exists a dependency of the detected light upon a multiplicative association of the object properties and a linear or non-linear dependency of the detected light upon each of the object conditions.

4. Method according to one of the preceding claims, in which the spatial pattern is given by means of a pattern of an illumination intensity at the object (40) and the object (40) is illuminated with the pattern of the illumination intensity such that there exists a non-linear dependency of the light intensity, which is detected at a detector device (6) and originates from an object point, to the illumination intensity which prevails at this object point.

5. Method according to one of the preceding claims in which the non-linear dependency of the detected light is formed by means of saturation by fluorescent light from fluorophores under intensive illumination, saturation of the absorption of illuminating light under intensive illumination, a dependency of the phase of the emitted or scattered light upon the illumination intensity which is present in the object, SHG- or THG processes, a dependency of the light properties of the Raman scattering upon the value of one or more object properties, temporally coherent effects on the atoms or molecules in the object (40), a multi-photon absorption, CARS processes, a stimulated emission, occupancy of long-lived states or of chemically altered states, radiating or radiation-free energy transfer processes from fluorophores to adjacent fluorophores, non-homogenous electrical or magnetic fields prevailing spatially at the object point, pressures, shear forces or mechanical stress conditions prevailing at the object point, temperatures prevailing at the object point, chemical conditions prevailing at the object point and/or additional object irradiation with electromagnetic rays or sound waves.

6. Method according to one of the preceding claims, in which the spatial pattern of an object condition can be described or approximately described in the reciprocal space by means of a number of points, which are distributed in one, two or three dimensions, or is formed in the spatial region spatially periodically or approximately periodically in one or more dimensions.

7. Method according to one of the preceding claims, in which the object and the spatial pattern are displaced relative to each other in one or more directions for setting different object conditions.

8. Method according to claim 7, in which the pattern is produced by a mask or by interference and a displacement of the pattern is achieved by displacement of the phase of different diffraction maxima.

9. Method according to one of the preceding claims, in which the object conditions are changed corresponding to a pre-determined temporal structure and the partial images are taken at different times.

10. Method according to claim 9, in which the illumination intensity is varied in order to produce different object conditions.

11. Method according to one of the preceding claims, in which the reconstruction of the object image is effected from the partial images by means of solving a system of equations taking into account the non-linear dependencies or by means of an iterative process.

**12.** Method according to one of the preceding claims, in which the position of the object or of one or more partial objects of the object (40) are determined.

**13.** Method according to one of the preceding claims, in which the reconstruction of the object image is effected taking into account a prior-known structure of the object (40) or of parts of the object (40).

**14.** Optical imaging system (100) having:

- an illumination device (10) and a detector device (60), which are equipped in order to illuminate an object (40) or to take a picture of the object (40) or of parts of the object (40),

- at least one pattern generator (20, 20¢, 20¢¢) in order to produce at least one variable spatial pattern of object conditions at the object (40), the illumination device (10) and/or the pattern generator (20, 20¢, 20¢¢) being equipped in order to produce object conditions upon which the light which can be detected by the detector device (60) is dependent, and

- a image generator (70) for reconstruction of an object image from partial images which have been taken with the detector device (60),

**characterised in that**

- the illumination device (10) and/or the pattern generator (20, 20¢, 20¢¢) are equipped in order to produce object conditions upon which the detectable light is non-linearly dependent, and
- the image generator (70) for the reconstruction of the object image is designed using the non-linear dependency of the detectable light upon the object conditions.

**15.** Optical system according to claim 14, in which the pattern generator (20, 20¢, 20¢¢) comprises a mask, with which a spatial pattern of an illumination intensity can be formed on the object (40).

**16.** Optical system according to claim 15, in which the mask comprises a multidimensional diffraction grating (22), a phase grating, a DMD device or an LCD matrix.

**17.** Device according to claim 15 or 16, in which the mask and the sample (40) are disposed displaceably and/or rotatably relative to each other.

**18.** Optical system according to claim 14, in which the pattern generator (20, 20¢, 20¢¢) comprises a mirror arrangement (23 - 27), which is equipped in order to produce an interference pattern on the object (40).

**19.** Optical system according to claim 14, in which the pattern generator (20, 20¢, 20¢¢) comprises a device for adjusting pre-determined physical or chemical conditions at the object (40) corresponding to the spatial pattern.

**20.** Optical system according to claim 14, in which a displacement device is provided for displacement of the object (40) in the spatial pattern of the object conditions.

**21.** Optical system according to one of the claims 14 to 20, in which the illumination device (10) comprises a photoflash lamp, a laser or a high pressure lamp.

**22.** Optical system according to one of the claims 14 to 21, in which an illumination optic (30) and/or an imaging optic (50) are provided.

**23.** Use of a method or of an optical system according to one of the preceding claims in combination with optical microscopic methods or corresponding microscopic arrangements, especially in combination with standard Fraunhofer microscopy, epifluorescence microscopy, confocal microscopy, 4Pi microscopy, theta microscopy, near field microscopy, microscopic $I^2M$-, $I^3M$- and $I^5M$ methods, STED methods, multi-photon microscopy, CARS method and SHG- or THG microscopy.

**Revendications**

1. Procédé pour l'obtention d'une image d'au moins un objet (40), au moins deux images partielles de l'objet (40) étant enregistrées sous des conditions d'objet respectivement différentes, qui sont formées sur l'objet avec des modèles spatiaux, et l'image de l'objet qui est souhaitée étant déterminée à partir des images partielles, **caractérisé en ce que** les modèles spatiaux sont conçus de telle façon que les images partielles contiennent des contributions différentes de diverses parties de fréquences spatiales de la structure de l'objet, **en ce qu'**il existe respectivement pour un point d'objet une dépendance non-linéaire de la lumière détectée par le point d'objet par rapport aux conditions existant au point d'objet et **en ce que** la détermination de l'image de l'objet a lieu en utilisant la dépendance non-linéaire de la lumière détectée par rapport aux conditions d'objet respectives.

2. Procédé selon la revendication 1, **caractérisé en ce que** sont formés des modèles spatiaux d'au moins une condition d'objet, pour laquelle il existe respectivement la dépendance non-linéaire de la lumière qui part du point d'objet et qui est détectée.

3. Procédé selon la revendication 1, **caractérisé en ce que** des modèles spatiaux d'au moins deux conditions d'objet sont formés, pour lesquels il existe une dépendance de la lumière détectée par rapport à une liaison multiplicative des caractéristiques d'objets et une dépendance linéaire ou non-linéaire de la lumière détectée par rapport à chacune des conditions d'objet.

4. Procédé selon l'une quelconque des revendications précédentes, **caractérisé en ce que** le modèle spatial est donné par un modèle d'une intensité d'éclairage sur l'objet (40) et **en ce que** l'objet (40) est éclairé de telle manière avec le modèle de l'intensité d'éclairage qu'il existe une dépendance non-linéaire de l'intensité de lumière saisie sur un dispositif de détection (60) et partant d'un point d'objet par rapport à l'intensité d'éclairage existant sur ce point d'objet.

5. Procédé selon l'une quelconque des revendications précédentes, **caractérisé en ce que** la dépendance non-linéaire de la lumière saisie est formée par une saturation de lumière fluorescente de fluorogènes sous un éclairage intense, une saturation de l'absorption de la lumière d'éclairage sous un éclairage intense, une dépendance de la phase de la lumière émise ou diffuse par rapport à l'intensité d'éclairage existant sur l'objet, des processus SHG ou THG, une dépendance des caractéristiques de lumière de la diffusion spatiale par rapport à la valeur d'une ou de plusieurs caractéristique(s) d'objet, des effets cohérents dans le temps sur des atomes ou sur des molécules dans l'objet (40), une absorption multiphotons, des processus CARS, une émission stimulée, une occupation d'états de longue durée ou d'états chimiquement modifiés, des processus de transfert d'énergie rayonnants ou non-rayonnants de fluorogènes à des fluorogènes voisins, des champs électriques ou magnétiques non-homogènes au niveau spatial existant sur le point d'objet, des pressions existant sur le point d'objet, des efforts de cisaillement ou des conditions mécaniques de tension, des températures existant sur le point d'objet, des conditions chimiques existant sur le point d'objet et/ou des irradiations supplémentaires de l'objet par des rayons électromagnétiques ou des ondes sonores.

6. Procédé selon l'une quelconque des revendications précédentes, **caractérisé en ce que** le modèle spatial d'une condition d'objet peut être décrit ou peut être décrit approximativement dans l'espace réciproque par un nombre de points, qui sont répartis sur une, deux ou trois dimensions, ou est formé dans l'espace local de manière spatiale périodique ou approximativement périodique dans une ou dans plusieurs dimensions.

7. Procédé selon l'une quelconque des revendications précédentes, **caractérisé en ce que**, pour l'établissement de différentes conditions d'objets, l'objet et le modèle spatial sont déplacés l'un par rapport à l'autre dans une dans plusieurs directions.

8. Procédé selon la revendication 7, **caractérisé en ce que** le modèle est généré par un masque ou par interférence et **en ce qu'**un déplacement du modèle est obtenu par un décalage de la phase de différentes valeurs maximales de diffraction.

9. Procédé selon l'une quelconque des revendications précédentes, **caractérisé en ce que** les conditions d'objet sont modifiées selon une structure chronologique prédéterminée et **en ce que** les images partielles sont enregistrées à des moments différents.

10. Procédé selon la revendication 9, **caractérisé en ce que** l'intensité d'éclairage est variée pour la génération des différentes conditions d'objet.

**11.** Procédé selon l'une quelconque des revendications précédentes, **caractérisé en ce que** la reconstruction de l'image d'objet à partir des images partielles a lieu par la solution d'un système d'équation en tenant compte des dépendances non-linéaires ou par une procédure itérative.

**12.** Procédé selon l'une quelconque des revendications précédentes, **caractérisé en ce que** la position de l'objet ou d'un ou de plusieurs objets partiels de l'objet (40) est déterminée.

**13.** Procédé selon l'une quelconque des revendications précédentes, **caractérisé en ce que** la reconstruction de l'image d'objet a lieu en tenant compte d'une structure préalablement connue de l'objet (40) ou de parties de l'objet (40).

**14.** Système optique de représentation d'image (100) avec un dispositif d'éclairage (10) et un dispositif de détection (60), qui sont équipés pour éclairer un objet (40) ou pour enregistrer une image de l'objet (40) ou de parties de l'objet (40), avec au moins un générateur de modèles (20, 20', 20") pour générer au moins un modèle spatial variable de conditions d'objets sur l'objet (40), le dispositif d'éclairage (10) et/ou le générateur de modèles (20, 20', 20") étant équipés pour générer des conditions d'objets dont dépend la lumière pouvant être détectée avec le dispositif de détection (60) et avec un générateur d'images (70) pour la reconstruction d'une image d'objet à partir d'images partielles, qui ont été enregistrées avec le dispositif de détection (60), **caractérisé en ce que** le dispositif d'éclairage (10) et/ou le générateur de modèles (20, 20', 20") sont équipés pour générer des conditions d'objets dont dépend de manière non-linéaire la lumière pouvant être détectée et **en ce que** le générateur d'images (70) est équipé pour la reconstruction de l'image d'objet en utilisant la dépendance non-linéaire de la lumière détectée par rapport aux conditions d'objet.

**15.** Système optique selon la revendication 14, **caractérisé en ce que** le générateur de modèles (20, 20', 20") comprend un masque, avec lequel il est possible de former sur l'objet (40) un modèle spatial d'une intensité d'éclairage.

**16.** Système optique selon la revendication 15, **caractérisé en ce que** le masque comprend une grille de diffraction multidimensionnelle (22), une grille de phases, un dispositif DMD ou une matrice LCD.

**17.** Dispositif selon la revendication 15 ou 16, **caractérisé en ce que** le masque et l'échantillon (40) sont disposés de manière à pouvoir être déplacés et/ou tournés l'un par rapport à l'autre.

**18.** Système optique selon la revendication 14, **caractérisé en ce que** le générateur de modèles (20, 20', 20") comprend un ensemble de miroirs (23-27), qui est équipé pour générer un modèle d'interférence sur l'objet (40).

**19.** Système optique selon la revendication 14, **caractérisé en ce que** le générateur de modèles (20, 20', 20") comprend un dispositif pour établir sur l'objet (40) des conditions physiques et chimiques prédéterminées, et ceci conformément au modèle spatial.

**20.** Système optique selon la revendication 14, **caractérisé en ce qu'**il est prévu un dispositif de réglage pour le déplacement de l'objet (40) dans le modèle spatial des conditions d'objets.

**21.** Système optique selon l'une quelconque des revendications 14 à 20, **caractérisé en ce que** le dispositif d'éclairage (10) comprend une lampe à flash, un laser ou une lampe à haute pression.

**22.** Système optique selon l'une quelconque des revendications 14 à 21, **caractérisé en ce qu'**il est prévu un système optique d'éclairage (30) et/ou un système optique de représentation d'image (50).

**23.** Utilisation d'un procédé ou d'un système optique selon l'une quelconque des revendications précédentes en combinaison avec des procédés de microscopie optique ou des dispositifs de microscopie correspondants, en particulier en combinaison avec la microscopie de télécommunication standard, la microscopie d'épifluorescence, la microscopie à foyer commun, la microscopie 4Pi, la microscopie thêta, la microscopie à champ proche, les procédés microscopiques $I^2M$, $I^3M$ et $I^5M$, les procédés STED, la microscopie à multi-photons, les procédés CARS et la microscopie SHG et THG.

Fig. 1

EP 1 157 297 B1

Fig. 2

100

30

20`

50

10

20

20``

40

60

70

**Fig. 3**

60

52

20

51

21    22

31

32

10

100

33

40

**Fig. 4**

Fig. 5

(a)                (b)                (c)

(d)                (e)                (f)

(g)                (h)                (i)

Fig. 6

(a)

(b)

(c)

(d)

(e

(f)

Fig. 7

## Simulation unter seitlicher Beleuchtung

Fig. 8

## Simulierte Gesamttransferfunktion

Fig. 9

(a)

(b)

(c)

Fig. 10